# EUROPEAN PATENT APPLICATION

(11) **EP 4 514 023 A1**
(43) Date of publication of application: **26.02.2025**
(21) Application number: 23802707.2
(22) Date of filing: 28.04.2023
(51) Int. Cl.: H04W 72/12

(54) **COMMUNICATION METHOD AND DEVICE**

(30) Priority: 07.05.2022 CN 202210502470; 09.06.2022 CN 202210649512
(71) Applicant: Huawei Technologies Co., Ltd., Shenzhen, Guangdong 518129 (CN)
(72) Inventor: ZHANG, Mengchen, Shenzhen, Guangdong 518129 (CN); XU, Haibo, Shenzhen, Guangdong 518129 (CN)
(74) Representative: Maiwald GmbH
(86) International application number: PCT/CN2023/091689
(87) International publication number: WO 2023/216935

(57) **Abstract**

This application relates to a communication method and a device. A first access network device receives a first RRC request message from a terminal device, and the terminal device is in an RRC non-connected state. The first access network device determines, based on the first RRC request message, that the terminal device is a device supporting a private function. The first access network device receives uplink information from the terminal device, or sends downlink small data to the terminal device. According to technical solutions in embodiments of this application, the terminal device in the RRC non-connected state can perform small data transmission, to reduce signaling overheads, and reduce power consumption caused because the terminal device enters an RRC connected state.

## Description

### CROSS-REFERENCE TO RELATED APPLICATIONS

This application claims priority to Chinese Patent Application No. 202210502470.2, filed with the China National Intellectual Property Administration on May 7, 2022 and entitled "COMMUNICATION METHOD", and claims priority to Chinese Patent Application No. 202210649512.5, filed with the China National Intellectual Property Administration on June 9, 2022 and entitled "COMMUNICATION METHOD AND DEVICE", both of which are incorporated herein by reference in their entireties.

### TECHNICAL FIELD

This application relates to the field of communication technologies, and in particular, to a communication method and a device.

### BACKGROUND

In some scenarios, a user equipment (user equipment, UE) in a radio resource control (radio resource control, RRC) non-connected state usually needs to perform transmission on a very small data packet, in other words, the UE needs to perform transmission only on small data (small data). Currently, it is stipulated that the UE can perform data transmission only after entering an RRC connected state. In this case, when the UE needs to perform transmission only on the small data, signaling overheads for the UE to enter the RRC connected state from the RRC non-connected state may even be greater than overheads for the transmission of the small data. This results in unnecessary power consumption and signaling overheads, and is a problem that needs to be urgently resolved.

### SUMMARY

Embodiments of this application provide a communication method and apparatus, to reduce signaling overheads caused by data transmission.

According to a first aspect, a first communication method is provided. The method may be performed by an access network device, may be performed by another device including a function of the access network device, or may be performed by a chip system (or a chip) or another functional module, where the chip system or the functional module can implement a function of the access network device, and is, for example, disposed in the access network device. The access network device is, for example, a first access network device, for example, a base station. The method includes: receiving a first RRC request message from a terminal device, where the terminal device is in an RRC non-connected state; determining, based on the first RRC request message, that the terminal device is a device supporting a private function; and receiving uplink information from the terminal device, or sending downlink small data to the terminal device.

In this embodiment of this application, even if the terminal device is in the RRC non-connected state, the first access network device may also perform small data transmission with the terminal device if the first access network device determines that the terminal device is the device supporting the private function. For example, the first access network device may receive the uplink information (for example, the uplink information includes uplink small data) from the terminal device, or the first access network device may send the downlink small data to the terminal device. In other words, according to the technical solution in embodiments of this application, the terminal device in the RRC non-connected state can perform small data transmission, to reduce signaling overheads, and reduce power consumption caused because the UE enters an RRC connected state.

In an optional implementation, the private function includes, for example, one or more of the following: a function of supporting a proprietary protocol, a function of identifying private signaling, or a small data transmission function in the RRC non-connected state. The proprietary protocol may be a communication protocol supported by a device provided by a specific vendor or a communication protocol jointly supported by some vendors that have signed a contract. For example, if an access network device and a UE that are provided by a same vendor can support a same proprietary protocol, both the access network device and the UE may be considered as devices supporting the private function. The private signaling includes, for example, device-pipe signaling, for example, signaling corresponding to the proprietary protocol. Devices supporting a same proprietary protocol can support private signaling.

In an optional implementation, before the receiving a first RRC request message from a terminal device, the method further includes: sending a first paging message, where the first paging message is for paging the terminal device. For example, if the first access network device has to-be-sent downlink data, the first access network device may page the terminal device by using the first paging message, to send the downlink data to the terminal device.

In an optional implementation, the determining, based on the first RRC request message, that the terminal device is a device supporting a private function includes: determining, based on a type of the first RRC request message, that the terminal device is the device supporting the private function; determining, based on a first identifier of the terminal device that is included in the first RRC request message, that the terminal device is the device supporting the private function; or determining, based on a first resource, that the terminal device requests small data, where the first resource is a resource that carries the first RRC request message, and is a resource reserved for small data transmission. For example, the type of the first RRC request message is a message type supported by a terminal device in an RRC inactive state. The RRC inactive state may not be put into commercial use, and the message type may be used by the terminal device supporting the private function. In this case, if the first access network device determines that the type of the first RRC request message is the message type supported by the terminal device in the RRC inactive state that is not put into commercial use, the first access network device may determine that the terminal device supports the private function. Alternatively, the first access network device may store a mapping relationship between a second identifier and the first identifier of the terminal device, and the second identifier may indicate the device supporting the private function. In this case, the first access network device may determine, based on the first identifier included in the first RRC request message, that the terminal device supports the private function. Alternatively, the resource reserved for the small data transmission is used by a terminal device in an RRC inactive state, and the RRC inactive state may not be put into commercial use. Therefore, the resource may be used by the terminal device supporting the private function. Therefore, if the first access network device determines that the resource carrying the first RRC request message is the resource reserved for the small data transmission, the first access network device may determine that the terminal device supports the private function.

In an optional implementation, the method further includes: obtaining, based on the first identifier of the terminal device that is included in the first RRC request message, context information of the terminal device that is stored in the first access network device; or sending first request information to a second access network device, where the first request information includes the first identifier; and receiving first response information from the second access network device, where the first response information includes context information of the terminal device. If the first access network device is an anchor access network device of the terminal device, the first access network device stores the context information of the terminal device, and the first access network device obtains the locally stored context information. Alternatively, if the first access network device is not an anchor access network device of the terminal device, the first access network device may not store the context information of the terminal device. Therefore, the first access network device may obtain the context information of the terminal device from the second access network device, where the second access network device is, for example, the anchor access network device of the terminal device.

In an optional implementation, the sending first request information to a second access network device includes: sending the first request information to the second access network device through an Xn interface; and receiving first response information from the second access network device includes: receiving the first response information from the second access network device through the Xn interface.

In an optional implementation, the sending first request information to a second access network device includes: sending the first request information to the second access network device through a first core network device; and receiving first response information from the second access network device includes: receiving the first response information from the second access network device through the first core network device.

The first access network device may directly interact with the second access network device, or may interact with the second access network device through the first core network device. A manner is flexible. The first core network device is, for example, an AMF, or may be another device.

In an optional implementation, the first request information further includes one or more of the following: a C-RNTI allocated by the first access network device to the terminal device, a PCI of a cell in which the terminal device is located and that is covered by the first access network device, integrity protection information of the terminal device, or an identifier of the cell in which the terminal device is located and that is covered by the first access network device. Content included in the first request information is not limited.

In an optional implementation, the first response information further includes first indication information, and the first indication information indicates that the terminal device is the device supporting the private function. For example, the first access network device may not be capable of determining whether the terminal device supports the private function, and the second access network device may indicate, by using the first indication information, that the terminal device supports the private function, so that the first access network device learns that the terminal device is the device supporting the private function.

In an optional implementation, the method further includes: resuming a radio bearer configuration and a security configuration of the terminal device based on the context information. After obtaining the context information of the terminal device, the first access network device may resume the radio bearer configuration and the security configuration of the terminal device based on the context information. For example, information about the radio bearer configuration and information about the security configuration are included in the context information, and the first access network device may resume the radio bearer configuration and the security configuration based on the context information.

In an optional implementation, the uplink information includes a second RRC request message, and includes first uplink small data and/or a BSR. Optionally, the second RRC request message is used by the terminal device to request to set up a connection to the first core network device. For example, the second RRC request message may include a fourth IE, and the fourth IE is, for example, a NAS-container IE, or may be another IE. Information included in the fourth IE may be used by the terminal device to request to set up the connection to the first core network device. Because a core network does not store the context information of the terminal device, the terminal device may set up the connection to the core network by using the second RRC request message for transmission of small data.

In an optional implementation, the method further includes: scheduling an uplink resource for the terminal device, where the uplink resource is for sending the uplink information. For example, if the terminal device sends the first RRC request message through the resource reserved for the small data transmission, the terminal device may continue to send the uplink information through a resource reserved for the small data transmission. In this case, the first access network device does not need to schedule the uplink resource for the terminal device. Alternatively, if the terminal device sends the first RRC request message not through the resource reserved for the small data transmission, the terminal device may send the uplink information not through a resource reserved for the small data transmission. In this case, the first access network device may schedule the uplink resource for the terminal device, so that the terminal device may send the uplink information through the uplink resource.

In an optional implementation, before the sending downlink small data to the terminal device, the method further includes: receiving a second RRC request message from the terminal device. Optionally, the second RRC request message is used by the terminal device to request to set up a connection to the first core network device. For example, the second RRC request message may include a fourth IE, and the fourth IE is, for example, a NAS-container IE, or may be another IE. Information included in the fourth IE may be used by the terminal device to request to set up the connection to the first core network device. In a transmission process of the downlink small data, the terminal device may also send the second RRC request message to the first access network device, to request to set up the connection to a core network.

In an optional implementation, the method further includes: receiving second uplink small data and/or a BSR from the terminal device. In the transmission process of the downlink small data, if the terminal device has to-be-sent uplink data (for example, the second uplink small data), the terminal device may also send the uplink data to the first access network device. For example, the terminal device may send the second RRC request message and the uplink information to the first access network device together. In this case, the uplink information may include the second uplink small data and/or the BSR.

In an optional implementation, the method further includes: sending a second request message to the first core network device based on the second RRC request message. Optionally, the second request message is used by the terminal device for requesting to set up the connection between the terminal device and the first core network device. For example, the second RRC request message may include the fourth IE, and the fourth IE is, for example, the NAS-container IE, or may be the another IE. The information included in the fourth IE may be used by the terminal device to request to set up the connection to the first core network device.

In an optional implementation, before the receiving a first RRC request message from a terminal device, the method further includes: when the terminal device is in an RRC connected state, receiving second indication information from the terminal device, where the second indication information indicates that the terminal device is the device supporting the private function; and establishing a mapping relationship between the first identifier of the terminal device and a second identifier, where the second identifier indicates that the terminal device is the device supporting the private function, or adding the first identifier of the terminal device to a first set, where the first set is a set of identifiers of devices supporting the private function. The first access network device may obtain information indicating that the terminal device is the device supporting the private function. The information is, for example, the mapping relationship or the first set including the first identifier. The first access network device may subsequently determine, by using the information, whether the terminal device supports the private function.

In an optional implementation, before the receiving a first RRC request message from a terminal device, the method further includes: sending a first RRC release message to the terminal device, where the first RRC release message is for releasing the terminal device to the RRC non-connected state, the first RRC release message further includes suspend indication information, and the suspend indication information indicates the terminal device to retain the context information. When releasing the terminal device, the first access network device may indicate, by using the suspend indication information, the terminal device to retain the context information, so that the terminal device may not release the context information when entering the RRC non-connected state.

In an optional implementation, the RRC non-connected state includes an RRC idle state or an RRC inactive state.

According to a second aspect, a second communication method is provided. The method may be performed by a terminal device, may be performed by another device including a function of the terminal device, or may be performed by a chip system (or a chip) or another functional module, where the chip system or the functional module can implement a function of the terminal device, and is, for example, disposed in the terminal device. The terminal device is, for example, a remote terminal device. The method includes: sending a first RRC request message to a first access network device, where the terminal device is in an RRC non-connected state, and the terminal device supports a private function; and sending uplink information to the first access network device, or receiving downlink small data from the first access network device.

In an optional implementation, the private function includes, for example, one or more of the following: a function of supporting a proprietary protocol, a function of identifying private signaling, or a small data transmission function in the RRC non-connected state.

In an optional implementation, the sending a first RRC request message to a first access network device includes: sending the first RRC request message to the first access network device in a random access process; or sending the first RRC request message to the first access network device through a first resource, where the first resource is a resource reserved for small data transmission.

In an optional implementation, the sending uplink information to the first access network device includes: receiving scheduling information from the first access network device; and sending the uplink information to the first access network device through an uplink resource scheduled by using the scheduling information.

In an optional implementation, the sending uplink information to the first access network device includes: sending the uplink information to the first access network device through a second resource, where the second resource is a resource reserved for the small data transmission.

In an optional implementation, the uplink information includes a second RRC request message, and includes uplink small data and/or a BSR. Optionally, the second RRC request message is used by the terminal device to request to set up a connection to a first core network device. For example, the second RRC request message may include a fourth IE, and the fourth IE is, for example, a NAS-container IE, or may be another IE. Information included in the fourth IE may be used by the terminal device to request to set up the connection to the first core network device.

In an optional implementation, the method further includes: sending a second RRC request message to the first access network device. Optionally, the second RRC request message is used by the terminal device to request to set up a connection to a first core network device. For example, the second RRC request message may include a fourth IE, and the fourth IE is, for example, a NAS-container IE, or may be another IE. Information included in the fourth IE may be used by the terminal device to request to set up the connection to the first core network device.

In an optional implementation, the method further includes: sending uplink small data and/or a BSR to the first access network device.

In an optional implementation, the RRC non-connected state includes an RRC idle state or an RRC inactive state.

For technical effects brought by the second aspect or the optional implementations, refer to the descriptions of the technical effects of the first aspect or the corresponding implementations.

According to a third aspect, a third communication method is provided. The method may be performed by an access network device, may be performed by another device including a function of the access network device, or may be performed by a chip system (or a chip) or another functional module, where the chip system or the functional module can implement a function of the access network device, and is, for example, disposed in the access network device. The access network device is, for example, a second access network device, for example, a base station. The method includes: receiving first request information from a first access network device, where the first request information includes a first identifier of a terminal device; determining, based on the first identifier, that the terminal device is a device supporting a private function; and sending first response information to the first access network device, where the first response information includes context information of the terminal device.

In an optional implementation, the receiving first request information from a first access network device includes: receiving the first request information from the first access network device through an Xn interface; and sending first response information to the first access network device includes: sending the first response information to the first access network device through the Xn interface.

In an optional implementation, the receiving first request information from a first access network device includes: receiving the first request information from the first access network device through a first core network device; and sending first response information to the first access network device includes: sending the first response information to the first access network device through the first core network device.

In an optional implementation, the first request information includes the first identifier, and includes one or more of the following: a C-RNTI allocated by the first access network device to the terminal device, a PCI of a cell in which the terminal device is located and that is covered by the first access network device, integrity protection information of the terminal device, or an identifier of the cell in which the terminal device is located and that is covered by the first access network device.

In an optional implementation, the first response information further includes first indication information, and the first indication information indicates that the terminal device is the device supporting the private function.

For technical effects brought by the third aspect or the optional implementations, refer to the descriptions of the technical effects of the first aspect or the corresponding implementations.

According to a fourth aspect, a fourth communication method is provided. The method may be performed by an access network device, may be performed by another device including a function of the access network device, or may be performed by a chip system (or a chip) or another functional module, where the chip system or the functional module can implement a function of the access network device, and is, for example, disposed in the access network device. The access network device is, for example, a first access network device, for example, a base station. The method includes: receiving third indication information from a terminal device, where the third indication information indicates that the terminal device is a device supporting a private function, and the terminal device is in an RRC non-connected state; scheduling a third resource for the terminal device based on the third indication information; and receiving a second RRC request message from the terminal device on the third resource.

In this embodiment of this application, when the terminal device is released to the RRC non-connected state, neither the terminal device nor the access network device needs to retain context information of the terminal device. This helps save storage space of the terminal device and the access network device. When the context information is not stored, the terminal device may send the third indication information to the first access network device. In this way, the first access network device can also determine that the terminal device is the device supporting the private function, so that the terminal device can perform small data transmission, to reduce signaling overheads.

In an optional implementation, the private function includes, for example, one or more of the following: a function of supporting a proprietary protocol, a function of identifying private signaling, or a small data transmission function in the RRC non-connected state.

In an optional implementation, the third indication information is a MAC CE, the MAC CE corresponds to a first MAC subheader, a value of the first MAC subheader is a first value, and the first value indicates that the terminal device is the device supporting the private function. Alternatively, the third indication information is a first MAC subheader, a value of the first MAC subheader is a first value, and the first value indicates that the terminal device is the device supporting the private function. Alternatively, the third indication information is RRC-layer information, a value of the RRC-layer information is a second value, and the second value indicates that the terminal device is the device supporting the private function. There may be a plurality of implementations of the third indication information, and an appropriate implementation may be selected during actual application. This is flexible.

In an optional implementation, the receiving a second RRC request message from the terminal device on the third resource includes: receiving the second RRC request message from the terminal device on the third resource by using a default SRB 1 configuration. Optionally, the second RRC request message is used by the terminal device to request to set up a connection to a first core network device. For example, the second RRC request message may include a fourth IE, and the fourth IE is, for example, a NAS-container IE, or may be another IE. Information included in the fourth IE may be used by the terminal device to request to set up the connection to the first core network device. Because the terminal device and the first access network device do not store the context information of the terminal device, an SRB 1 configuration cannot be resumed. Therefore, the terminal device may send the second RRC request message by using the default SRB 1 configuration, and the first access network device may receive the second RRC request message by using the default SRB 1 configuration. In this way, even if neither the terminal device nor the first access network device stores the context information of the terminal device, transmission of the second RRC request message can be implemented.

In an optional implementation, the method includes: sending a second request message to the first core network device based on the second RRC request message, where the second request message is for requesting to set up the connection between the terminal device and the first core network device.

In an optional implementation, the method further includes: scheduling a fourth resource for the terminal device; and receiving uplink small data and/or a BSR from the terminal device on the fourth resource by using a default DRB configuration. Because neither the terminal device nor the first access network device stores the context information of the terminal device, a DRB configuration cannot be resumed. Therefore, if the terminal device has the to-be-sent uplink small data, the terminal device may send the uplink small data and/or the BSR by using the default DRB configuration, and the first access network device may receive the uplink small data and/or the BSR by using the default DRB configuration. In this way, even if neither the terminal device nor the first access network device stores the context information of the terminal device, transmission of the uplink small data and/or the BSR can be implemented.

In an optional implementation, the method further includes: sending information about a security configuration to the terminal device by using the default SRB 1 configuration. After obtaining the information about the security configuration, the terminal device may perform encryption, integrity protection, and/or the like on the to-be-sent uplink small data based on the security configuration corresponding to the information about the security configuration.

In an optional implementation, the method further includes: sending downlink small data to the terminal device by using the default DRB configuration. Because neither the terminal device nor the first access network device stores the context information of the terminal device, the DRB configuration cannot be resumed. Therefore, if the first access network device has the to-be-sent downlink small data, the first access network device may send the downlink small data by using the default DRB configuration, and the terminal device may receive the downlink small data by using the default DRB configuration.

In an optional implementation, before the receiving third indication information from a terminal device, the method further includes: sending a first paging message, where the first paging message is for paging the terminal device. For example, if the first access network device has to-be-sent downlink data, the first access network device may page the terminal device by using the first paging message, to send the downlink data to the terminal device.

In an optional implementation, the RRC non-connected state includes an RRC idle state or an RRC inactive state.

According to a fifth aspect, a fifth communication method is provided. The method may be performed by a terminal device, may be performed by another device including a function of the terminal device, or may be performed by a chip system (or a chip) or another functional module, where the chip system or the functional module can implement a function of the terminal device, and is, for example, disposed in the terminal device. The terminal device is, for example, a remote terminal device. The method includes: sending third indication information to a first access network device, where the third indication information indicates that the terminal device is a device supporting a private function, and the terminal device is in an RRC non-connected state; receiving first scheduling information from the first access network device, where the scheduling information is for scheduling a third resource; and sending uplink information to the first access network device on the third resource.

In an optional implementation, the third indication information is a MAC CE, the MAC CE corresponds to a first MAC subheader, a value of the first MAC subheader is a first value, and the first value indicates that the terminal device is the device supporting the private function. Alternatively, the third indication information is a first MAC subheader, a value of the first MAC subheader is a first value, and the first value indicates that the terminal device is the device supporting the private function. Alternatively, the third indication information is RRC-layer information, a value of the RRC-layer information is a second value, and the second value indicates that the terminal device is the device supporting the private function.

In an optional implementation, the sending uplink information to the first access network device on the third resource includes: sending a second RRC request message to the first access network device on the third resource by using a default SRB 1 configuration. Optionally, the second RRC request message is used by the terminal device to request to set up a connection to a first core network device. For example, the second RRC request message may include a fourth IE, and the fourth IE is, for example, a NAS-container IE, or may be another IE. Information included in the fourth IE may be used by the terminal device to request to set up the connection to the first core network device.

In an optional implementation, the sending uplink information to the first access network device on the third resource further includes: sending uplink small data and/or a BSR to the first access network device on the third resource by using a default DRB configuration.

In an optional implementation, the method further includes: receiving information about a security configuration from the first access network device by using the default SRB 1 configuration.

In an optional implementation, the method further includes: receiving downlink small data from the first access network device by using the default DRB configuration.

In an optional implementation, the method further includes: receiving a first paging message from the access network device.

In an optional implementation, the RRC non-connected state includes an RRC idle state or an RRC inactive state.

For technical effects brought by the fifth aspect or the optional implementations, refer to the descriptions of the technical effects of the fourth aspect or the corresponding implementations.

According to a sixth aspect, a communication apparatus is provided. The communication apparatus may be the first access network device according to any one of the first aspect to the fifth aspect. The communication apparatus has a function of the first access network device. The communication apparatus is, for example, the first access network device, a large device including the first access network device, or a functional module, for example, a baseband apparatus or a chip system, in the first access network device. Alternatively, the communication apparatus may be the second access network device according to any one of the first aspect to the fifth aspect. The communication apparatus has a function of the second access network device. The communication apparatus is, for example, the second access network device, a large device including the second access network device, or a functional module, for example, a baseband apparatus or a chip system, in the second access network device. In an optional implementation, the communication apparatus includes a baseband apparatus and a radio frequency apparatus. In another optional implementation, the communication apparatus includes a processing unit (sometimes also referred to as a processing module) and a transceiver unit (sometimes also referred to as a transceiver module). The transceiver unit can implement a sending function and a receiving function. When the transceiver unit implements the sending function, the transceiver unit may be referred to as a sending unit (sometimes also referred to as a sending module). When the transceiver unit implements the receiving function, the transceiver unit may be referred to as a receiving unit (sometimes also referred to as a receiving module). The sending unit and the receiving unit may be a same functional module, the functional module is referred to as the transceiver unit, and the functional module can implement the sending function and the receiving function. Alternatively, the sending unit and the receiving unit may be different functional modules, and the transceiver unit is a general term of these functional modules.

In an optional implementation, if the communication apparatus is the first access network device according to any one of the first aspect to the fifth aspect, the transceiver unit (or the receiving unit) is configured to receive a first RRC request message from a terminal device, where the terminal device is in an RRC non-connected state; the processing unit is configured to determine, based on the first RRC request message, that the terminal device is a device supporting a private function; and the transceiver unit (or the receiving unit) is further configured to receive uplink information from the terminal device, or send downlink small data to the terminal device.

In an optional implementation, if the communication apparatus is the second access network device according to any one of the first aspect to the fifth aspect, the transceiver unit (or the receiving unit) is configured to receive first request information from a first access network device, where the first request information includes a first identifier of a terminal device; the processing unit is configured to determine, based on the first identifier, that the terminal device is a device supporting a private function; and the transceiver unit (or the sending unit) is further configured to send first response information to the first access network device, where the first response information includes context information of the terminal device.

In an optional implementation, if the communication apparatus is the first access network device according to any one of the first aspect to the fifth aspect, the transceiver unit (or the receiving unit) is configured to receive third indication information from a terminal device, where the third indication information indicates that the terminal device is a device supporting a private function, and the terminal device is in an RRC non-connected state; the processing unit is configured to schedule a third resource for the terminal device based on the third indication information; and the transceiver unit (or the receiving unit) is further configured to receive a second RRC request message from the terminal device on the third resource.

In an optional implementation, the communication apparatus further includes a storage unit (sometimes also referred to as a storage module). The processing unit is configured to: be coupled to the storage unit, and execute a program or instructions in the storage unit, to enable the communication apparatus to perform the function of the first access network device or the second access network device according to any one of the first aspect to the fifth aspect.

According to a seventh aspect, a communication apparatus is provided. The communication apparatus may be the terminal device according to any one of the first aspect to the fifth aspect. The communication apparatus has a function of the terminal device. The communication apparatus is, for example, the terminal device, a large device including the terminal device, or a functional module, for example, a baseband apparatus or a chip system, in the terminal device. In an optional implementation, the communication apparatus includes a baseband apparatus and a radio frequency apparatus. In another optional implementation, the communication apparatus includes a processing unit (sometimes also referred to as a processing module) and a transceiver unit (sometimes also referred to as a transceiver module). For an implementation of the transceiver unit, refer to the descriptions of the sixth aspect.

In an optional implementation, the transceiver unit (or the sending unit) is configured to send a first RRC request message to a first access network device, where the terminal device is in an RRC non-connected state, and the terminal device supports a private function; and the transceiver unit (or the sending unit) is further configured to send uplink information to the first access network device, or receive downlink small data from the first access network device.

In an optional implementation, the transceiver unit (or the sending unit) is configured to send third indication information to a first access network device, where the third indication information indicates that the terminal device is a device supporting a private function, and the terminal device is in an RRC non-connected state; the transceiver unit (or the receiving unit) is further configured to receive first scheduling information from the first access network device, where the scheduling information is for scheduling a third resource; and the transceiver unit (or the sending unit) is further configured to send uplink information to the first access network device on the third resource.

In an optional implementation, the communication apparatus further includes a storage unit (sometimes also referred to as a storage module). The processing unit is configured to: be coupled to the storage unit, and execute a program or instructions in the storage unit, to enable the communication apparatus to perform the function of the terminal device according to any one of the first aspect to the fifth aspect.

According to an eighth aspect, a communication system is provided, including the communication apparatus according to the fifth aspect and the communication apparatus according to the sixth aspect.

According to a ninth aspect, a computer-readable storage medium is provided. The computer-readable storage medium is configured to store a computer program or instructions; and when the computer program or the instructions are run, the method performed by the first access network device, the second access network device, or the terminal device in the foregoing aspects is implemented.

According to a tenth aspect, a computer program product including instructions is provided. When the computer program product runs on a computer, the methods in the foregoing aspects are implemented.

According to an eleventh aspect, a chip system is provided, including a processor and an interface. The processor is configured to: invoke instructions from the interface and run the instructions, to enable the chip system to implement the methods in the foregoing aspects.

### BRIEF DESCRIPTION OF DRAWINGS

FIG. 1 is a diagram of transition between RRC states;
FIG. 2A and FIG. 2B are diagrams of two application scenarios according to an embodiment of this application;
FIG. 3 to FIG. 8 are flowcharts of several communication methods according to embodiments of this application;
FIG. 9 is a diagram of an apparatus according to an embodiment of this application; and
FIG. 10 is a diagram of another apparatus according to an embodiment of this application.

### DESCRIPTION OF EMBODIMENTS

To make objectives, technical solutions, and advantages of embodiments of this application clearer, the following further describes embodiments of this application in detail with reference to the accompanying drawings.

In embodiments of this application, unless otherwise specified, a quantity of a noun indicates "a singular noun or a plural noun", namely, "one or more". The term "at least one" means one or more, and "a plurality of" means two or more. The term "and/or" describes an association relationship between associated objects and indicates that three relationships may exist. For example, A and/or B may indicate the following three cases: Only A exists, both A and B exist, and only B exists, where A and B may be singular or plural. The character "/" generally indicates an "or" relationship between associated objects. For example, A/B indicates A or B. The term "at least one of the following items (pieces)" or a similar expression thereof refers to any combination of these items, including any combination of singular items (pieces) or plural items (pieces). For example, at least one of a, b, or c indicates a, b, c, a and b, a and c, b and c, or a, b, and c, where a, b, and c may be singular or plural.

Ordinal numbers such as "first" and "second" in embodiments of this application are used to distinguish between a plurality of obj ects, but are not used to limit sizes, content, sequences, time sequences, priorities, importance, or the like of the plurality of objects. For example, a first radio resource control (radio resource control, RRC) request message and a second RRC request message may be a same message, or may be different messages. In addition, the names do not indicate that the two messages are different in content, sizes, application scenarios, transmitting ends/receiving ends, priorities, importance, or the like. In addition, step numbers in embodiments described in this application are merely used to distinguish between different steps, but are not used to limit a sequence of the steps. For example, S301 may be performed before S302, may be performed after S302, or may be performed simultaneously with S302.

The following describes some terms or concepts in embodiments of this application, to facilitate understanding of a person skilled in the art.

In embodiments of this application, a terminal device is a device with a wireless transceiver function, and may be a stationary device, a mobile device, a handheld device (for example, a mobile phone), a wearable device, a vehicle-mounted device, or a built-in wireless apparatus (for example, a communication module, a modem, or a chip system) of the foregoing device. The terminal device is configured to connect people, things, machines, and the like, and may be widely used in various scenarios, for example, including but not limited to: cellular communication, device-to-device (device-to-device, D2D), vehicle to everything (vehicle to everything, V2X), machine-to-machine/machine type communication (machine-to-machine/machine type communication, M2M/MTC), an internet of things (internet of things, IoT), virtual reality (virtual reality, VR), augmented reality (augmented reality, AR), industrial control (industrial control), self-driving (self-driving), telemedicine (telemedicine), a smart grid (smart grid), smart furniture, smart office, smart wear, smart transportation, a smart city (smart city), an uncrewed aerial vehicle, and a robot. The terminal device may be sometimes referred to as a UE, a terminal, an access station, a UE station, a remote station, a wireless communication device, a user apparatus, or the like. For ease of description, an example in which the terminal device is the UE is used for description in embodiments of this application.

A network device in embodiments of this application includes, for example, an access network device and/or a core network device. The access network device is a device having a wireless transceiver function, and is configured to communicate with the terminal device. The access network device includes but is not limited to a base station (a base transceiver station (base transceiver station, BTS), a NodeB, an eNodeB/eNB, or a gNodeB/gNB), a transmission reception point (transmission reception point, TRP), a 3rd generation partnership project (3rd generation partnership project, 3GPP) base station that is subsequently evolved, an access node in a wireless fidelity (wireless fidelity, Wi-Fi) system, a wireless relay node, a wireless backhaul node, or the like. The base station may be a macro base station, a micro base station, a picocell base station, a small cell, a relay station, or the like. A plurality of base stations may support networks using a same access technology, or may support networks using different access technologies. The base station may include one or more co-site or non-co-site transmission reception points. Alternatively, the access network device may be a radio controller in a cloud radio access network (cloud radio access network, CRAN) scenario, a central unit (central unit, CU), and/or a distributed unit (distributed unit, DU). Alternatively, the access network device may be a server or the like. For example, a network device in a vehicle-to-everything (vehicle-to-everything, V2X) technology may be a road side unit (road side unit, RSU). An example in which the access network device is the base station is used below for description. The base station may communicate with the terminal device, or may communicate with the terminal device via a relay station. The terminal device may communicate with a plurality of base stations in different access technologies. The core network device is configured to implement functions such as mobility management, data processing, session management, and policy and charging. Names of devices that implement a core network function in systems using different access technologies may be different. This is not limited in embodiments this application. A 5G system is used as an example. The core network device includes an access and mobility management function (access and mobility management function, AMF), a session management function (session management function, SMF), a policy control function (policy control function, PCF), a user plane function (user plane function, UPF), and the like.

In embodiments of this application, a communication apparatus configured to implement a function of the network device may be the network device, or may be an apparatus, for example, a chip system, that can support the network device in implementing the function. The apparatus may be installed in the network device. In the technical solutions provided in embodiments of this application, an example in which the apparatus configured to implement the function of the network device is the network device is used to describe the technical solutions provided in embodiments of this application.

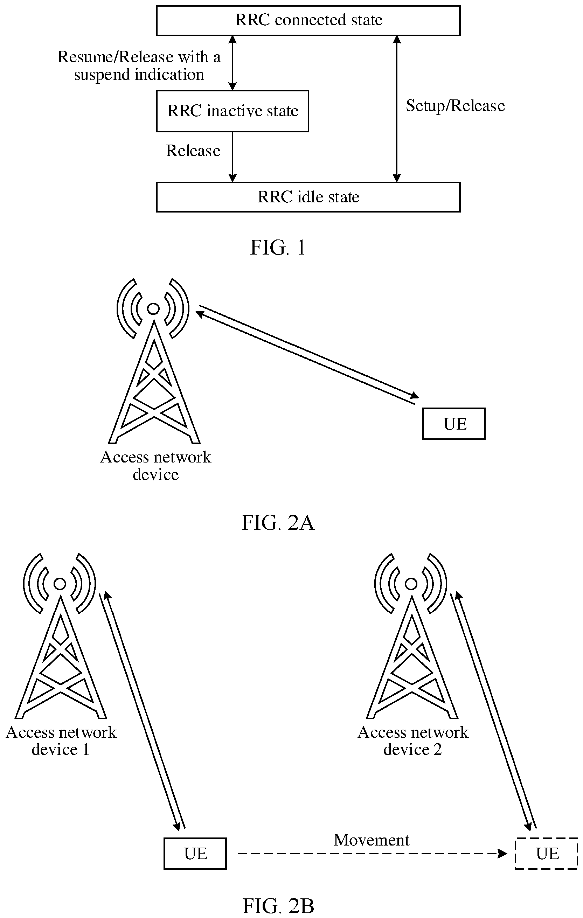

RRC state of a UE: Currently, the UE has three RRC states in total: an RRC_IDLE (IDLE) state, an RRC _INACTIVE (INACTIVE) state, and an RRC _CONNECTED (CONNECTED) state. If the UE has set up an RRC connection, the UE is in the RRC connected state or the RRC inactive state. If the UE has not set up an RRC connection, the UE is in the RRC idle state. The RRC inactive state is introduced for the UE in 5G NR, and the RRC state is mainly for a case in which "A UE performing infrequent (infrequent) data transmission is usually kept in the RRC inactive state by a network". When the UE is in different RRC states, different operations are performed. For example, FIG. 1 is a diagram of transition between the three RRC states. When the UE is in the RRC idle state, if the UE needs to perform data transmission, the UE may initiate an RRC connection setup process, to enter the RRC connected state. If the UE in the RRC connected state does not need to perform data transmission, a base station may release the UE, so that the UE enters the RRC idle state or the RRC inactive state. If the base station sends a release (release) message with a suspend indication, for example, an RRCRelease with suspend indication (RRCRelease with suspend indication) message, the UE enters the RRC inactive state; or if the base station sends a release message, for example, an RRC release message, the UE enters the RRC idle state. In addition, the UE in the RRC inactive state may further return to the RRC connected state through an RRC connection resume (resume) process, or the base station may release the UE in the RRC inactive state to the RRC idle state.

It can be learned from the foregoing different RRC states that the UE in an RRC non-connected state does not support data transmission, in other words, the UE can perform data transmission only after entering the RRC connected state. However, in some scenarios, the UE in the RRC non-connected state usually needs to perform transmission on a small data packet, in other words, the UE needs to perform transmission only on small data (small data), for example, related services of a smartphone such as instant messaging, heartbeat packets, or push messages of some applications (APP), or related services of a non-smartphone such as periodic data (for example, a heartbeat packet) of a wearable device or a periodic reading (for example, a reading of a smart meter) sent by an industrial wireless sensor network. In this case, signaling overheads for the UE to enter the RRC connected state from the RRC non-connected state may even be greater than overheads for the transmission of the small data. This results in unnecessary power consumption and signaling overheads. Therefore, currently, a small data transmission procedure is introduced, for example, early data transmission (early data transmission, EDT) in a long term evolution (long term evolution, LTE) system or small data transmission (small data transmission, SDT) in a new radio (new radio, NR) system. The EDT and the SDT both support direct small data transmission performed by the UE without entering the RRC connected state.

Current small data transmission solutions mainly include a random access (random access, RA)-based small data transmission solution, for example, RA-SDT or EDT, and a preconfigured resource-based small data transmission solution, for example, configured grant small data transmission (configured grant small data transmission, CG-SDT) or preconfigured uplink resource (preconfigured uplink resource, PUR)-based small data transmission. The two small data transmission solutions may be applied to different application scenarios. For example, for application to the internet-of-things (IoT) field, mobility of the UE is limited, a connection is usually set up in a same cell to send data, and the cell is seldom changed. Therefore, the preconfigured resource-based small data transmission solution is applicable. For another example, for application to the instant messaging of the smartphone or the like, the UE may remain in a moving state in a use process. In this case, a connection needs to be set up to send a data packet (for example, a WeChat message) of the UE to a different cell. Therefore, the random access-based small data transmission solution is applicable.

Currently, the NR system only supports a small data transmission procedure for the UE in the RRC inactive state. However, because the RRC inactive state has a high requirement on network deployment, the RRC inactive state is not put into commercial use. Therefore, the UE still needs to enter the RRC connected state for small data transmission. This causes large signaling overheads for the data transmission.

In view of this, the technical solutions in embodiments of this application are provided. In embodiments of this application, even if a UE is in an RRC non-connected state, a first access network device may also perform small data transmission with the UE if the first access network device determines that the UE is a device supporting a private function. For example, the first access network device may receive uplink information (for example, the uplink information includes uplink small data) from the UE, or the first access network device may send downlink small data to the UE. In other words, according to the technical solutions in embodiments of this application, the UE in the RRC non-connected state can perform small data transmission, to reduce signaling overheads, and reduce power consumption caused because the UE enters an RRC connected state.

The technical solutions provided in embodiments of this application may be applied to a 4th generation mobile communication technology (4th generation, 4G) system, for example, the long term evolution (long term evolution, LTE) system, may be applied to a 5G system, for example, the NR system, or may be applied to a next generation mobile communication system or another similar communication system. This is not specifically limited. In addition, the technical solutions provided in embodiments of this application may be applied to a device-to-device (device-to-device, D2D) scenario, for example, an NR-D2D scenario, or may be applied to a vehicle-to-everything (vehicle-to-everything, V2X) scenario, for example, an NR-V2X scenario. For example, the technical solutions may be applied to an internet of vehicles, for example, V2X or vehicle-to-vehicle (vehicle-to-vehicle, V2V), or may be applied to fields such as intelligent driving, assisted driving, or an intelligent connected vehicle. If the technical solutions are applied to the D2D scenario, both communication parties may be UEs. If the technical solutions are applied to a non-D2D scenario, one communication party may be a UE, and the other communication party may be a network device (for example, an access network device); or both communication parties may be network devices. In the following descriptions, an example in which the two communication parties are respectively the UE and the access network device is used.

For example, FIG. 2A and FIG. 2B show two communication network architectures to which embodiments of this application are applicable. A difference between FIG. 2A and FIG. 2B lies in: In FIG. 2A, after being released by an anchor (anchor) access network device of a UE to an RRC non-connected state, the UE still camps on the anchor access network device, namely, an access network device in FIG. 2A; or a UE in FIG. 2A moves after being released to an RRC non-connected state, and accesses an access network device shown in FIG. 2A after the movement, where the access network device is a serving access network device of the UE. In FIG. 2B, a UE moves after being released by an anchor access network device (an access network device 1 in FIG. 2B) of the UE to an RRC non-connected state, and camps on a new access network device (an access network device 2 in FIG. 2B) after the movement. The anchor access network device may be understood as a network node/base station/network device. For example, the anchor access network device is an anchor base station. The anchor base station is also referred to as a last serving base station (last serving gNB), an anchor base station (anchor gNB), or an old base station (old gNB), and may maintain a context of one or more UEs in the RRC non-connected state, or store a packet data convergence protocol (packet data convergence protocol, PDCP) context or function (for example, encryption or integrity protection) of the UE. Alternatively, the anchor access network device may be an access network device connected to the UE when the UE is in an RRC connected state last time or an access network device that is connected to the UE when the UE is in an RRC connected state last time and that sends an RRC release message to the UE. In addition to the anchor access network device, an access network device on which the UE camps after moving in the RRC non-connected state may be used as a serving access network device of the UE, and the serving access network device may not have the context of the UE. For example, if the serving access network device is a base station, the serving access network device may also be referred to as a new serving base station (new serving gNB), a current serving base station (current serving gNB), a new base station (new gNB), or a serving base station (serving gNB).

For more descriptions of the access network device and the UE, refer to the foregoing descriptions.

To better describe embodiments of this application, the following describes, with reference to the accompanying drawings, a method provided in embodiments of this application. In embodiments of this application, an RRC non-connected state includes, for example, an RRC inactive state or an RRC idle state. In embodiments of this application, a private function includes, for example, one or more of the following: a function of supporting a proprietary protocol, a function of identifying private signaling, or a small data transmission function in the RRC non-connected state. The proprietary protocol may be a communication protocol supported by a device provided by a specific vendor or a communication protocol jointly supported by some vendors that have signed a contract. For example, if an access network device and a UE that are provided by a same vendor can support a same proprietary protocol, both the access network device and the UE may be considered as devices supporting the private function. The private signaling includes, for example, device-pipe signaling, for example, signaling corresponding to the proprietary protocol. Devices supporting a same proprietary protocol can support private signaling.

Unless otherwise specified in the following, steps represented by dashed lines in the accompanying drawings corresponding to embodiments of this application are all optional steps.

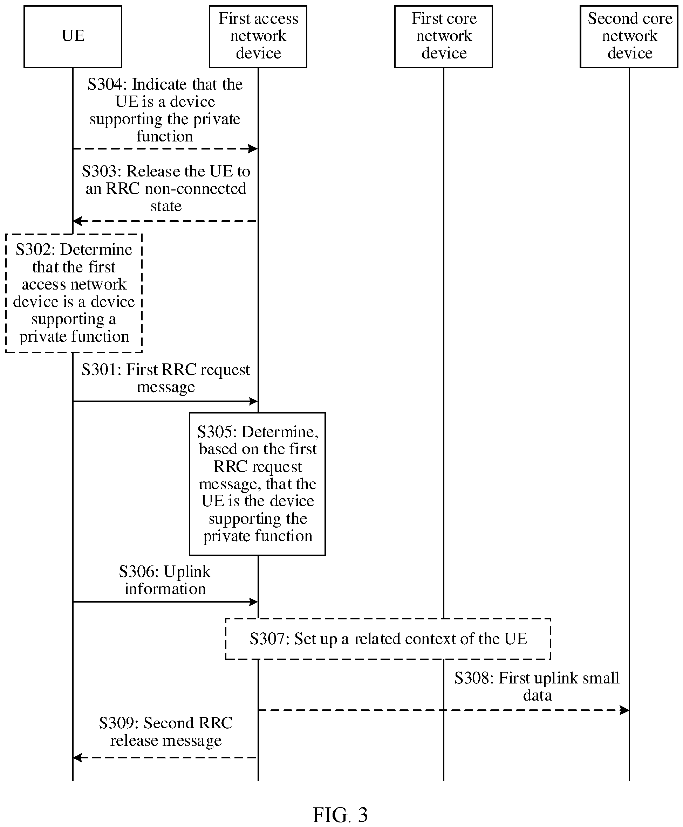

An embodiment of this application provides a first communication method. FIG. 3 is a flowchart of the method. The method may be applied to the network architecture shown in FIG. 2A. For example, a UE in the method is the UE in FIG. 2A, and a first access network device in the method is the access network device in FIG. 2A. In this embodiment of this application, the first access network device is an anchor access network device of the UE. An uplink small data transmission process is used as an example in the embodiment shown in FIG. 3.

S301: The UE sends a first RRC request message to the first access network device. Correspondingly, the first access network device receives the first RRC request message from the UE. If uplink small data arrives at the UE, in other words, the UE has to-be-sent uplink small data, the UE may perform S301.

In this embodiment of this application, the UE is, for example, a device supporting a private function.

An RRC non-connected state includes an RRC idle state. To be specific, the device supporting the private function can support small data transmission even in the RRC idle state. In addition, this embodiment of this application is applicable to both an NR system and an LTE system. For example, currently, it is specified in the NR system that only a UE in an RRC inactive state can support the small data transmission, but a UE in the RRC idle state cannot support the small data transmission. However, the RRC inactive state is not put into commercial use currently. To be specific, during actual application, if the UE is not in the RRC connected state, the UE is in the RRC idle state. However, the small data transmission cannot be supported in the RRC idle state. Therefore, the data transmission can be performed only after the UE enters the RRC connected state. This causes large resource overheads. According to the technical solution in this embodiment of this application, the UE can perform small data transmission even when the UE is in the RRC idle state, to reduce the resource overheads and a data transmission delay. For another example, currently, although a UE in the RRC idle state can perform small data transmission in the LTE system, there are many restrictions on an application scenario and a UE type. For example, a standard solution in the LTE system is merely for two small data transmission scenarios: massive machine-type communications (massive machine-type communications, mMTC) and a narrowband internet of things (narrowband internet of things, NB-IoT); and is for the following UE types: a bandwidth reduced low complexity (bandwidth reduced low complexity, BL) UE, a coverage enhancement (coverage enhancement, CE) UE, and an NB-IoT UE. A UE in the RRC idle state other than these types of UEs in these scenarios cannot perform small data transmission. This limits application of the small data transmission process to a large extent. In this embodiment of this application, the UE that supports the private function may perform small data transmission, and an application scenario, a type of the UE, and the like are not limited, so that an application scope of the small data transmission solution is expanded, and the resource overheads can be reduced to a large extent.

For example, if the current uplink small data transmission process uses a random access-based small data transmission solution, the UE may send the first RRC request message through a random access process. For example, the UE may send the first RRC request message by using a message 3 (Msg3) in a 4-step (4-step) random access process. Before sending the first RRC request message, the UE further needs to send a random access preamble (preamble), where the random access preamble may be a random access preamble used in the 4-step random access process. For another example, the UE may send the first RRC request message by using a message A (MsgA) in a 2-step (2-step) random access process. When sending the first RRC request message, the UE further needs to send a random access preamble, where the random access preamble may be a random access preamble used in the 2-step random access process. A resource used by the UE to send the first RRC request message may be a physical uplink shared channel (physical uplink shared channel, PUSCH) resource used in the 2-step random access process. If the UE sends the first RRC request message by using the Msg3 in the 4-step random access process or the MsgA in the 2-step random access process, optionally, after receiving the Msg3 or the MsgA, the first access network device may further send contention resolution (contention resolution) information to the UE. Correspondingly, the UE may receive the contention resolution information.

For another example, if the current uplink small data transmission process uses a preconfigured resource-based small data transmission solution, the UE may send the first RRC request message through a preconfigured resource. For example, the UE may send the first RRC request message through a first resource. The first resource is a resource reserved for the small data transmission. For example, the first resource is a CG-SDT resource or a PUR.

In some implementations, when the UE is in different RRC states and in different service scenarios, implementation forms of the first RRC request message may be different. For example, the first RRC request message sent by the UE in the RRC idle state (optionally, the UE in this case may store a UE context, for example, configuration information for obtaining a key for encrypting the uplink small data, or the UE may not store the context of the UE) may be an RRC connection request (RRC connection request) message, an RRC connection resume request (RRC connection resume request) message, an RRC early data request (RRC early data request) message, an RRC resume request (RRC resume request) message, an RRC resume request 1 message, or an RRC setup request (RRC setup request) message. Alternatively, the first RRC request message sent by the UE may be another RRC message that has a same function but is not standardized in the 3rd generation partnership project (3rd generation partnership project, 3GPP).

For another example, the first RRC request message sent by the UE in the RRC inactive state may be an RRC early data request message, an RRC resume request message, an RRC resume request 1 message, or an RRC setup request message. Alternatively, the first RRC request message sent by the UE may be another RRC message that has a same function but is not standardized in 3 GPP.

Optionally, the first RRC request message may be for authorization, authentication, and the like on the UE. The first RRC request message may include an identifier of the UE, for example, an inactive radio network temporary identifier (inactive radio network temporary identifier, I-RNTI) of the UE or a unique identifier of the UE in a core network. In addition, the first RRC request message may further include related information of an access network device to which the UE is connected when the UE is in the RRC connected state last time. In addition, the first RRC request message further includes related information for performing encryption or integrity protection on the data.

The UE in this embodiment of this application is the UE supporting the private function, and the private function may include the small data transmission in the RRC non-connected state. To be specific, if the UE needs to perform small data transmission, it is better to perform small data transmission with an access network device supporting the private function. Therefore, optionally, before S301, the method may further include S302: The UE identifies (or determines) the first access network device, in other words, the UE determines that the first access network device is a device supporting the private function. For example, the UE may receive a broadcast message of the first access network device. If the first access network device supports the private function, the broadcast message may indicate that the first access network device supports the private function. If the first access network device does not support the private function, the broadcast message may not indicate that the first access network device supports the private function. Therefore, the UE can determine, based on the broadcast message, whether the first access network device supports the private function. In this embodiment of this application, an example in which the first access network device supports the private function is used. The broadcast message is, for example, system information, for example, a system information block 1 (system block information, SIB1), or may be a broadcast message other than the system information.

In S301, the UE may be in the RRC non-connected state. Optionally, the method may further include S303: The first access network device sends a first RRC release message to the UE. Correspondingly, the UE receives the first RRC release message, where the first RRC release message may be for releasing the UE to the RRC non-connected state. To be specific, before S303, the UE may be in the RRC connected state in coverage of the first access network device, and is released to the RRC non-connected state through S303. The first RRC release message is, for example, an RRC release message, an RRC connection release (RRC connection release) message, or signaling (or referred to as device-pipe signaling) supported by the UE supporting the private function, for example, Huawei private signaling (Huawei private signaling, HPS). Alternatively, the first RRC release message may be another message having a similar function. For example, S303 may be performed before S302.

In this embodiment of this application, the first RRC release message may include suspend indication information, and the suspend indication information may indicate the UE to retain context information of the UE. In this embodiment of this application, regardless of whether the UE is released to the RRC inactive state or the RRC idle state, the first RRC release message may include the suspend indication information. In other words, regardless of whether the UE is in the RRC inactive state or the RRC idle state, the UE may retain the context information instead of releasing the context information. In some embodiments, because the RRC inactive state is not put into commercial use, the UE enters the RRC idle state after receiving the first RRC release message including the suspend indication information. In some other embodiments, the RRC inactive state is already put into commercial use, and the first RRC release message sent by the first access network device to the UE may further include state indication information. The state indication information may indicate the UE to enter the RRC inactive state or the RRC idle state. Optionally, the first RRC release message may further include information such as a first identifier of the UE and a next hop chaining count (next hop chaining count, NCC), where the NCC may be used when the UE initiates next small data transmission. The first identifier is, for example, a resume identity (resume identity, resume ID), or may be another identifier of the UE.

Because the UE retains the context information of the UE when being released to the RRC non-connected state, the UE may resume a corresponding radio bearer (radio bearer, RB) configuration based on the context information. The radio bearer configuration includes, for example, a data radio bearer (data radio bearer, DRB) and/or a signaling radio bearer (signaling radio bearer, SRB). The signaling radio bearer includes, for example, an SRB1, and may further include another SRB. For example, the UE may resume the radio bearer configuration when sending the first RRC request message to the first access network device, or resume the radio bearer configuration after sending the first RRC request message to the first access network device. Alternatively, the UE may resume the radio bearer configuration after receiving the first RRC release message. An occasion for resuming the radio bearer configuration by the UE is not limited.

Optionally, before S303, the method may further include S304: The UE sends second indication information to the first access network device. Correspondingly, the first access network device receives the second indication information from the UE. The second indication information may indicate that the UE is the UE supporting the private function. In S304, the UE is still in the RRC connected state, and there is an RRC connection between the UE and the first access network device. The UE may send the second indication information, so that the first access network device can identify the UE, for example, can determine that the UE is the UE supporting the private function.

After receiving the second indication information, the first access network device may determine corresponding information, where the information can indicate that the UE is the UE supporting the private function. For example, the first access network device may establish a mapping relationship between a second identifier and the first identifier of the UE, where the second identifier may indicate that a UE having the mapping relationship with the second identifier is the UE supporting the private function. For example, the second identifier is "1". If the first access network device determines that a specific UE is the UE supporting the private function, the first access network device may add the identifier " 1" to a first identifier of the UE, and the first access network device may store the mapping relationship. Therefore, the first access network device can subsequently determine, based on the identifier "1", that the UE is the UE supporting the private function. Optionally, the first access network device may establish the mapping relationship after receiving the second indication information, or may establish the mapping relationship before sending the first RRC release message (for example, before performing S303).

For another example, the first access network device does not need to establish a mapping relationship, but may add the first identifier of the UE to a first set, where the first set is a set of identifiers of devices supporting the private function. For example, the first set is implemented in a form of a list, or may be implemented in another form. If the first access network device determines that a specific UE is the UE supporting the private function, the first access network device may add a first identifier of the UE to the first set. Therefore, if the first access network device determines that a first identifier of a specific UE belongs to the first set, the first access network device can determine that the UE is the UE supporting the private function. Optionally, the first access network device may add the first identifier of the UE to the first set after receiving the second indication information, or may add the first identifier of the UE to the first set before sending the first RRC release message (for example, before performing S303).

Alternatively, the first access network device may indicate, in another manner, that a specific UE is the UE supporting the private function. This is not limited in this embodiment of this application.

S305: The first access network device determines, based on the first RRC request message, that the UE is the device supporting the private function.

In S305, the first access network device may determine, in a plurality of different manners, whether the UE is the device supporting the private function. The following uses examples for description.

### 1. First determining manner:

The first access network device may determine, based on a type (type) of the first RRC request message, that the UE is the device supporting the private function.

For example, the type of the first RRC request message is a message type supported by a UE in the RRC inactive state. However, the RRC inactive state is a state that is not put into commercial use. During actual application, the UE is generally not in the RRC inactive state. Therefore, this message type may not be applied. However, the device supporting the private function can support the message type. Therefore, if the first access network device determines that the type of the first RRC request message is the message type supported by the UE in the RRC inactive state, the first access network device may determine that the UE is the UE supporting the private function.

### 2. Second determining manner:

The first access network device may determine, based on the first identifier included in the first RRC request message, that the UE is the device supporting the private function.

As described above, the first identifier is an identifier of the UE, and the first RRC request message may include the first identifier. After obtaining the first identifier, the first access network device may query locally stored information. For example, if the first access network device determines that there is the mapping relationship between the first identifier and the second identifier, the first access network device may determine that the UE is the device supporting the private function. Alternatively, if the first access network device determines that the first identifier belongs to the first set, the first access network device may determine that the UE is the device supporting the private function.

### 3. Third determining manner:

The first access network device may determine, based on a resource that carries the first RRC request message, that the UE is the device supporting the private function.

For example, the resource that carries the first RRC request message is the first resource. If the first resource is the resource reserved for the small data transmission, the first access network device may determine that the UE is the device supporting the private function.

For example, in the NR system, the first access network device may determine, in any one of the foregoing three manners, that the UE is the device supporting the private function. For another example, in the LTE system, because the UE in the RRC idle state can also perform small data transmission, the UE may send the first RRC request message when performing small data transmission, or the UE in the LTE system may perform another communication process by sending the first RRC request message. In other words, the first access network device may fail to determine, based on the type of the first RRC request message, whether the UE is the device supporting the private function. In this case, the first access network device may determine, in the foregoing second determining manner or the foregoing third determining manner, that the UE is the device supporting the private function.

Certainly, the first access network device may alternatively determine, in a manner other than the foregoing three determining manners, whether the UE is the device supporting the private function. This is not limited.

Optionally, if the first access network device determines that the UE is the device supporting the private function, the first access network device may resume the context information of the UE. For example, the first access network device may resume access stratum (access stratum, AS) information of the UE included in the context information, and/or resume a security configuration (or referred to as a security context) of the UE included in the context information. The AS information of the UE includes, for example, information about the radio bearer configuration of the UE. The radio bearer configuration of the UE may include a DRB configuration and/or an SRB configuration of the UE. The SRB configuration includes, for example, an SRB 1 configuration, and may further include another SRB configuration. Optionally, the first access network device may obtain, based on the first identifier of the UE, the context information of the UE that is stored in the first access network device. Alternatively, the first access network device may obtain, based on another identifier of the UE, the context information of the UE that is stored in the first access network device.

S306: The UE sends uplink information to the first access network device. Correspondingly, the first access network device receives the uplink information from the UE.

If the UE sends the first RRC request message to the first access network device through the first resource, the UE may continue to send the uplink information to the first access network device through a preconfigured resource (in other words, through a resource reserved for the small data transmission), and the first access network device does not need to schedule an uplink resource for the UE. For example, the UE may send the uplink information to the first access network device through a second resource, where the second resource is, for example, the resource reserved for the small data transmission. The first access network device may identify, in S305, the first resource that carries the first RRC request message, and the first access network device can receive the uplink information on the second resource.

Alternatively, if the UE sends the first RRC request message to the first access network device by using the Msg3 or the MsgA instead of using the first resource, the first access network device may further schedule an uplink resource for the UE before S306. For example, the first access network device may send scheduling information to the UE, where the scheduling information may be for scheduling the uplink resource. For example, after determining that the UE is the device supporting the private function, the first access network device schedules the uplink resource for the UE. After receiving the scheduling information, the UE may send the uplink information to the first access network device through the uplink resource. The scheduling information is, for example, downlink control information (downlink control information, DCI), or may be information of another protocol layer.

In this embodiment of this application, the uplink information may include a second RRC request message, and the UE may send the second RRC request message to the first access network device by using the resumed SRB1. For example, the second RRC request message is an uplink information transfer (UL information transfer) message, the UL information transfer message may include non-access stratum (non-access stratum, NAS) information, and the NAS information may be carried in a NAS-container (container) information element (information element, IE) in the UL information transfer message. For example, if this embodiment of this application is applied to the NR system, the NAS-container IE may include a service request (service request). Alternatively, if this embodiment of this application is applied to the LTE system, the NAS-container IE may include an attach request (attach request). It can be learned that information included in the NAS-container IE (namely, the NAS-container IE) may be used by the UE to request to set up a connection to a first core network device. In other words, the UE may request, by using the information included in the NAS-container IE (namely, the NAS-container IE), to set up the connection to the first core network device. The first access network device may set up the connection to the first core network device based on the second RRC request message (that is, based on the NAS-container IE included in the second RRC request message). In other words, the first access network device may set up the connection between the UE and the first core network device based on the second RRC request message (that is, based on the NAS-container IE included in the second RRC request message). The first core network device is, for example, an AMF, or may be another core network device.

Optionally, the uplink information may further include first uplink small data and/or a buffer status report (buffer status report, BSR) in addition to the second RRC request message. In other words, the UE may send the first uplink small data and/or the BSR together through the uplink resource scheduled by the first access network device or through the second resource. The UE may send the first uplink small data and/or the BSR by using the resumed DRB.

For the first access network device, because the security configuration and/or the AS information of the UE has been resumed in S305, the first access network device may receive the second RRC request message by using the resumed SRB 1 configuration, and may receive the first uplink small data and/or the BSR by using the resumed DRB configuration.

If the uplink information includes the BSR but does not include the first uplink small data, the first access network device may schedule a resource for the UE after receiving the BSR, and the UE may send the first uplink small data through the scheduled resource by using the resumed DRB configuration. The uplink small data transmission process may include one or more times of transmission, in other words, the UE may send the uplink small data to the first access network device for one or more times. The 1^{st} sending process may be initial transmission (initial transmission) or an initial phase (initial phase), and a sending process other than the 1^{st} sending process may be subsequent transmission (subsequent transmission) until the uplink small data is completely sent, or until a sending condition is not met.

Alternatively, if the uplink information includes the first uplink small data, and the first uplink small data is all uplink small data to be sent by the UE, the uplink small data transmission process may end after the first uplink small data is completely transmitted. If the UE still has other to-be-sent uplink small data in addition to the first uplink small data, the UE may continue to send the other uplink small data to the first access network device until the uplink small data is completely sent, or until a sending condition is not met. Similarly, the uplink small data transmission process may include one or more times of transmission.

If the uplink small data transmission process includes a plurality of times of transmission, before a next time of transmission starts, the first access network device may schedule a resource for the UE, and the UE may perform the next time of transmission through the resource.

S307: The first access network device sets up a related context of the UE with the first core network device.

For example, the first access network device sends a second request message to the first core network device based on the second RRC request message. Correspondingly, the first core network device receives the second request message from the first access network device. The second request message may be for requesting to set up the connection between the UE and the first core network device. The first core network device is, for example, the AMF, or may be the another core network device. It may be understood that, after receiving the second RRC request message, the first access network device may trigger the sending of the second request message.

The first access network device may set up the related context of the UE with the first core network device by sending the second request message, for example, may set up a protocol data unit (protocol data unit, PDU) session (session) for the UE.

The second request message is, for example, a next generation (next generation, NG) interface message, and the NG interface message may be referred to as a second NG interface message. An NG interface is a communication interface between the first access network device and the first core network device. The second NG interface message is, for example, an initial UE message (initial UE message), or may be another message having a similar function.

Optionally, after receiving the second request message, the first core network device may send, to the first access network device, a message, for example, an initial context setup request (initial context setup request) message, for requesting to set up the context of the UE. After receiving the initial context setup request message, the first access network device may send an initial context setup response (initial context setup response) message to the first core network device. In this case, the setup of the context of the UE is completed.

S308: The first access network device sends the first uplink small data to a second core network device. Correspondingly, the second core network device receives the first uplink small data from the first access network device. The second core network device is, for example, a UPF, or may be another core network device.

The first access network device may send, to the second core network device, the first uplink small data that is from the UE. In addition, if the first access network device receives the other uplink small data from the UE in addition to the first uplink small data, the first access network device may also send the other uplink small data to the second core network device.

S309: The first access network device sends a second RRC release message to the UE. Correspondingly, the UE receives the second RRC release message from the first access network device. The second RRC release message may be for releasing the UE to the RRC non-connected state.

If the small data transmission ends, the first access network device may send the second RRC release message to the UE. The second RRC release message is, for example, an RRC release message, an RRC connection release message, or signaling, for example, HPS, supported by the UE supporting the private function. Alternatively, the second RRC release message may be another message having a similar function.

Optionally, the second RRC release message may further include one or more of the following: suspend indication information, the first identifier of the UE, or an NCC. In addition, the first access network device may continue to store the context information of the UE, for example, store the AS information and/or information about the security configuration of the UE; and continue to store information indicating that the UE is the UE supporting the private function (for example, the mapping relationship between the first identifier and the second identifier, or the first set that still includes the first identifier).

Optionally, if the first access network device still has downlink small data to be sent to the UE, the first access network device may send the downlink small data to the UE together with the second RRC release message in S309.

This embodiment of this application provides a solution in which the UE supporting the private function performs small data transmission, so that such a UE can implement the data transmission without entering the RRC connected state, to reduce signaling overheads. In addition, regardless of whether the UE is in the RRC inactive state or the RRC idle state and whether the UE is in the NR system, the LTE system, or another system, the UE of any type can perform small data transmission in any current application scenario. This reduces the signaling overheads to a large extent, so that more UEs can perform small data transmission without entering the RRC connected state, to reduce the data transmission delay. In addition, a quantity of small data transmission times is not limited in this embodiment of this application, and transmission may be performed for one or more times, so that transmission of more small data can be implemented.

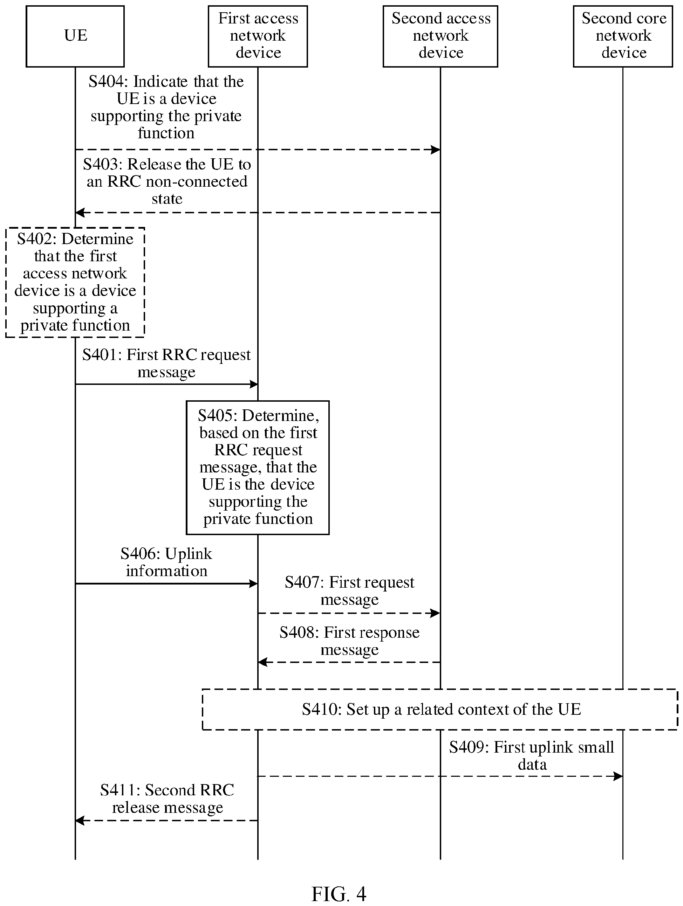

In the embodiment shown in FIG. 3, when the UE is released to the RRC non-connected state, the UE still camps on the anchor access network device. In another possibility, the UE moves after being released to the RRC non-connected state, and a serving access network device on which the UE camps after the movement is different from the anchor access network device. To resolve a small data transmission problem in this scenario, an embodiment of this application provides a second communication method. FIG. 4 is a flowchart of the method. The method may be applied to the network architecture shown in FIG. 2B. For example, a UE in the method is the UE in FIG. 2B, a first access network device in the method is the access network device 2 in FIG. 2B, and a second access network device in the method is the access network device 1 in FIG. 2B. In this embodiment of this application, the first access network device is a serving access network device of the UE, and the second access network device is an anchor access network device of the UE. An uplink small data transmission process is used as an example in the embodiment shown in FIG. 4.

S401: The UE sends a first RRC request message to the first access network device. Correspondingly, the first access network device receives the first RRC request message from the UE.

The UE is currently in an RRC non-connected state, and is released to the RRC non-connected state by the second access network device. After being released to the RRC non-connected state, the UE moves, and camps on the first access network device after the movement. Therefore, if uplink small data arrives at the UE, or the UE has to-be-sent uplink small data, the UE sends the first RRC request message to the first access network device.

In this embodiment of this application, the UE is, for example, a device supporting a private function. In addition, this embodiment of this application is applicable to both an NR system and an LTE system. For more descriptions of this content, refer to S301 in the embodiment shown in FIG. 3. In addition, for content such as a manner in which the UE sends the first RRC request message and an implementation form of the first RRC request message, refer to S301 in the embodiment shown in FIG. 3.

Optionally, the method may further include S402: The UE identifies the first access network device, in other words, the UE determines that the first access network device is a device supporting the private function. For this part of content, refer to S302 in the embodiment shown in FIG. 3.

Optionally, the method may further include S403: The second access network device sends a first RRC release message to the UE. Correspondingly, the UE receives the first RRC release message, where the first RRC release message may be for releasing the UE to the RRC non-connected state. The second access network device is the anchor access network device of the UE, and releases the UE to the RRC non-connected state. For this part of content, refer to S303 in the embodiment shown in FIG. 3.

Optionally, before S403, the method may further include S404: The UE sends second indication information to the second access network device. Correspondingly, the second access network device receives the second indication information from the UE. The second indication information may indicate that the UE is the UE supporting the private function. For this part of content, corresponding behavior performed by the second access network device after the second access network device receives the second indication information, and the like, refer to S304 and S301 in the embodiment shown in FIG. 3.

S405: The first access network device determines, based on the first RRC request message, that the UE is the device supporting the private function.

In this embodiment of this application, the first access network device is not the anchor access network device of the UE, and a first identifier of the UE and information (for example, the mapping relationship or the first set including the first identifier in S301 in the embodiment shown in FIG. 3) indicating whether the UE supports the private function are both stored in the anchor access network device (namely, the second access network device) of the UE. Therefore, the first access network device does not store the first identifier of the UE. Therefore, the first access network device cannot determine, in the second determining manner described in S305, that the UE is the device supporting the private function. For example, in the NR system, the first access network device may determine, in the first determining manner or the third determining manner in S305 in the embodiment shown in FIG. 3, that the UE is the device supporting the private function. Alternatively, in the LTE system, the first access network device may determine, in the third determining manner described in S305 in the embodiment shown in FIG. 3, that the UE is the device supporting the private function. However, if the UE sends the first RRC request message not through a resource reserved for small data transmission, the first access network device can determine, in neither the NR system nor the LTE system in the third determining manner described in S305, that the UE is the device supporting the private function.

Optionally, if the first access network device determines that the second access network device is a device supporting the private function, and the first access network device is also the device supporting the private function, the first access network device may set up a context of the UE, for example, set up a PDU session of the UE, with a first core network device. For a process in which the first access network device sets up the context of the UE with the first core network device, refer to S307 in the embodiment shown in FIG. 3.

S406: The UE sends uplink information to the first access network device.

The uplink information may include a second RRC request message, and optionally, may further include first uplink small data and/or a BSR. In this embodiment of this application, because the first access network device does not store context information of the UE in this case, the first access network device cannot read the small data and/or the BSR included in the uplink information.

For more content of S406, refer to S306 in the embodiment shown in FIG. 3.

Optionally, if this embodiment of this application is applied to the LTE system, the UE sends the first RRC request message not through the resource reserved for the small data transmission, and the first access network device cannot identify, based on the first RRC request message, whether the UE is the device supporting the private function, S405 and S406 may occur after S407 and S408 that are described below.

S407: The first access network device sends first request information to the second access network device. Correspondingly, the second access network device receives the first request information from the first access network device. The first request information may be for requesting the context information of the UE.

After receiving the first RRC request message, the first access network device may obtain the first identifier included in the first RRC request message. If the first access network device determines, through query, that the first identifier is not stored, the first access network device may determine the anchor access network device of the UE, namely, the second access network device, based on the first identifier. The first access network device may send the first request information to the second access network device, to request to obtain the context information of the UE.

Optionally, in a manner in which the first access network device sends the first request information to the second access network device, the first access network device sends the first request information to the second access network device through the first core network device. For example, the first access network device sends the first request information to the first core network device, and then the first core network device sends the first request information to the second access network device.

The first access network device sends the first request information to the first core network device. For example, the first request information is carried in a first request message, and the first request message is, for example, an NG interface message, where the NG interface message may be referred to as a first NG interface message. The first NG interface message is, for example, a handover required (handover required) message, or may be another message. The first NG interface message may include a first IE, for example, a source to target transparent container (source to target transparent container) IE, or may include another IE. A function of the first IE is to transparently transmit, through the first core network device, radio air interface-related information from a source access network device (for example, the first access network device) to a target access network device (for example, the second access network device), where the first IE is generated by the source access network device and sent to the target access network device. Optionally, the first IE is, for example, the first request information. The first IE may be transparently transmitted by the first core network device to the second access network device. For example, the first core network device may send a third request message to the second access network device, where the third request message may include the first IE. The third request message is, for example, an NG interface message, and may be referred to as a third NG interface message. The third NG interface message is, for example, a handover request (handover request) message, or may be another message.

The first IE may include one or more of the following information: the first identifier, a cell radio network temporary identifier (cell radio network temporary identifier, C-RNTI) allocated by the first access network device to the UE, a physical cell identifier (physical cell identifier, PCI) of a cell in which the UE is located and that is covered by the first access network device, integrity protection information of the UE, or an identifier of the cell in which the UE is located and that is covered by the first access network device.

The first identifier is, for example, an inactive radio network temporary identifier (inactive radio network temporary identifier, I-RNTI), and the I-RNTI may be equivalent to a resume identifier. The integrity protection (integrity protection) information of the UE includes, for example, a resume (resume) message authentication code for integrity (message authentication code for integrity, MAC-I) of the UE. The identifier of the cell in which the UE is located and that is covered by the first access network device may also be referred to as a new cell identifier (new cell identifier) of the UE, and for example, includes a target cell ID (target cell identity) or a cell ID (cell identity) of the UE.

Alternatively, in another manner in which the first access network device sends the first request information to the second access network device, the first access network device sends the first request information to the second access network device through an Xn interface, and the second access network device receives the first request information through the Xn interface. For example, the first request information is carried in a first request message. In this case, the first request message is, for example, an Xn interface message, and an Xn interface is a communication interface between the first access network device and the second access network device. In other words, the first access network device may directly send the first request information to the second access network device without forwarding by a core network. This communication manner can reduce a transmission delay. In this case, content included in the first request information is similar to the content included in the first IE described above.

S408: The second access network device sends first response information to the first access network device. Correspondingly, the first access network device receives the first response information from the second access network device. The first response information is, for example, response information for the first request information.

The second access network device receives the first IE or the first request information, and may obtain the first identifier. In this case, the second access network device may query whether the first identifier is stored. For example, if the second access network device stores the first identifier, and stores the information indicating that the UE is the device supporting the private function (for example, the information is a mapping relationship between the first identifier and a second identifier or a first set including the first identifier, where reference may be made to S304 in the embodiment described in FIG. 3), the second access network device determines that the UE is the device supporting the private function. In this case, the second access network device may obtain the stored context information of the UE, include the context information in the first response information, and send the first response information to the first access network device.

Optionally, if the first access network device sends the first request information to the second access network device through the first core network device, a manner in which the second access network device sends the first response information to the first access network device is that the second access network device may send the first response information to the first access network device through the first core network device. For example, the second access network device sends the first response information to the first core network device, and then the first core network device sends the first response information to the first access network device.

The second access network device sends the first response information to the first core network device. The first response information may be carried in a first response message, and the first response message is, for example, an NG interface message, where the NG interface message may be referred to as a fourth NG interface message. The fourth NG interface message is, for example, a handover required acknowledge (handover required acknowledge) message, or may be another message. The fourth NG interface message may include a second IE, for example, a target to source transparent container (target to source transparent container) IE, or may include another IE. A function of the second IE is to transparently transmit, through the first core network device, radio air interface-related information from a target access network device (for example, the second access network device) to a source access network device (for example, the first access network device), where the second IE is generated by the target access network device and sent to the source access network device. Optionally, the second IE is, for example, the first response information. The second IE may be transparently transmitted by the first core network device to the first access network device. For example, the first core network device may send a fourth request message to the first access network device, where the fourth request message may include the second IE. The fourth request message is, for example, an NG interface message, and may be referred to as a fifth NG interface message. The fifth NG interface message is, for example, a handover command (handover command) message, or may be another message.

The second IE may include the context information of the UE. For example, the context information in the second IE may include AS information of the UE and/or RRC context information of the UE. The AS information of the UE includes, for example, AS security information of the UE. Optionally, the second IE may further include first indication information, where the first indication information is alternatively referred to as private-device indication information, and may indicate that the UE is the device supporting the private function. In addition, the second IE may further include other information, for example, other information included in a UE context information-retrieve UE context response (UE context information-retrieve UE context response) IE. The UE context information-retrieve UE context response IE may be an IE included in an Xn interface retrieve UE context response (retrieve UE context response) message.

Alternatively, if the first access network device sends the first request information to the second access network device through the Xn interface, another manner in which the second access network device sends the first response information to the first access network device is that the second access network device may send the first response information to the first access network device through the Xn interface. In this case, the first access network device receives the first response information through the Xn interface. In this case, the first response information may be information carried in an Xn interface message. In other words, the second access network device may directly send the first response information to the first access network device without forwarding by the core network. This communication manner can reduce the transmission delay. In this case, content included in the first response information is similar to the content included in the second IE described above.

The first access network device obtains the context information of the UE through S407 and S408. In this case, the first access network device may resume the AS information, a security configuration, and the like of the UE based on the context information, to receive the uplink information in S406 by using the resumed information. For example, the first access network device may receive the second RRC request message by using a resumed SRB1, and may receive the first uplink small data by using a resumed DRB.

If the uplink information includes the BSR but does not include the first uplink small data, the first access network device may schedule a resource for the UE after receiving the BSR, and the UE may send the first uplink small data through the scheduled resource. The uplink small data transmission process may include one or more times of transmission, in other words, the UE may send the uplink small data to the first access network device for one or more times. The 1^{st} sending process may be initial transmission, and a sending process other than the 1^{st} sending process may be subsequent transmission until the uplink small data is completely sent, or until a sending condition is not met.

Alternatively, if the uplink information includes the first uplink small data, and the first uplink small data is all uplink small data to be sent by the UE, the uplink small data transmission process may end after the first uplink small data is completely transmitted. If the UE still has other to-be-sent uplink small data in addition to the first uplink small data, the UE may continue to send the other uplink small data to the first access network device until the uplink small data is completely sent, or until a sending condition is not met. Similarly, the uplink small data transmission process may also include one or more times of transmission.

If the uplink small data transmission process includes a plurality of times of transmission, before a next time of transmission starts, the first access network device may schedule a resource for the UE, and the UE may perform the next time of transmission through the resource.

S409: The first access network device sends the first uplink small data to a second core network device. Correspondingly, the second core network device receives the first uplink small data from the first access network device.

For more content of S409, refer to S308 in the embodiment shown in FIG. 3.

Optionally, the method further includes S410: The first access network device sets up a related context of the UE with the first core network device. For example, S410 may occur before S409. For more content of S410, refer to S307 in the embodiment shown in FIG. 3.

S411: The first access network device sends a second RRC release message to the UE. Correspondingly, the UE receives the second RRC release message from the first access network device.

For more content of S411, refer to S309 in the embodiment shown in FIG. 3.

This embodiment of this application provides a solution in which the UE supporting the private function performs small data transmission, so that such a UE can implement the data transmission without entering an RRC connected state, to reduce signaling overheads. In addition, regardless of whether the UE is in an RRC inactive state or an RRC idle state and whether the UE is in the NR system, the LTE system, or another system, the UE of any type can perform small data transmission in any current application scenario. This reduces the signaling overheads to a large extent, so that more UEs can perform small data transmission without entering the RRC connected state, to reduce the data transmission delay. In addition, a quantity of small data transmission times is not limited in this embodiment of this application, and transmission may be performed for one or more times, so that transmission of more small data can be implemented. In addition, even if the UE in the RRC non-connected state moves, the UE can still perform small data transmission in coverage of the serving access network device after the movement. It can be learned that, according to the technical solution in this embodiment of this application, the signaling overheads can be reduced in more scenarios.

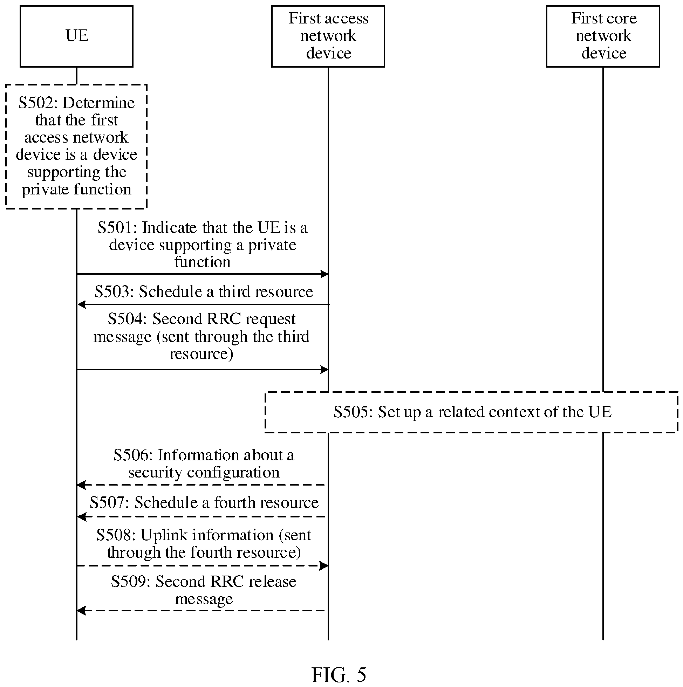

In the embodiment shown in FIG. 3 and the embodiment shown in FIG. 4, the UE retains the context information of the UE when the UE is in the RRC non-connected state, so that the UE can resume the corresponding configuration, for example, resume the radio bearer configuration described in S301 in the embodiment shown in FIG. 3, based on the context information. In another possibility, the UE does not store the context information of the UE after being released to the RRC non-connected state. To implement small data transmission of the UE in this case, an embodiment of this application provides a third communication method. FIG. 5 is a flowchart of the method. The method may be applied to the network architecture shown in FIG. 2A. For example, a UE in the method is the UE in FIG. 2A, and a first access network device in the method is the access network device in FIG. 2A. In this embodiment of this application, the first access network device may be an anchor access network device of the UE, and may be a serving access network device on which the UE camps after being released to an RRC non-connected state. The embodiment shown in FIG. 5 protects an uplink small data transmission process.

S501: The UE sends third indication information to the first access network device. Correspondingly, the first access network device receives the third indication information from the UE.

In this embodiment of this application, the UE is, for example, a device supporting a private function, and the third indication information may indicate that the UE is the device supporting the private function. In addition, this embodiment of this application is applicable to both an NR system and an LTE system. For more descriptions of this content, refer to S301 in the embodiment shown in FIG. 3.

The UE is currently in the RRC non-connected state. For example, before S501, the UE is released to the RRC non-connected state. The UE may be released by the first access network device, or may be released by another access network device. When the UE is released, the UE does not store context information of the UE. For example, if an RRC release message received by the UE does not include suspend indication information, the UE releases the context information of the UE. Correspondingly, an access network device (for example, the first access network device or the another access network device) that releases the UE does not store the context information of the UE, and also releases the context information of the UE when releasing the UE.

In this case, when uplink small data arrives at the UE, or the UE has to-be-sent uplink small data, the UE may send the third indication information to the first access network device on which the UE currently camps, to indicate that the UE is the device supporting the private function, so that the first access network device learns that the UE can perform small data transmission. Optionally, in S501, the UE may further send a first RRC request message to the first access network device. For example, the UE may send the first RRC request message by using a Msg3 in a 4-step random access process. Before sending the first RRC request message, the UE further needs to send a random access preamble, where the random access preamble may be a random access preamble used in the 4-step random access process. For another example, the UE may send the first RRC request message by using a MsgA in a 2-step random access process. When sending the first RRC request message, the UE further needs to send a random access preamble, where the random access preamble may be a random access preamble used in the 2-step random access process. A resource used by the UE to send the first RRC request message may be a PUSCH resource used in the 2-step random access process. For more descriptions of the first RRC request message, refer to S301 in the embodiment shown in FIG. 3. The third indication information may be included in the first RRC request message; or may not be included in the first RRC request message, but is separately sent.

There may be a plurality of implementations of the third indication information. Optionally, in an implementation of the third indication information, the third indication information is a MAC control element (control element, CE), and the MAC CE may be identified by a first MAC subheader (subheader). If a value of the first MAC subheader is a first value, the UE may be indicated as the device supporting the private function. In this case, the third indication information may not be included in the first RRC request message.

Alternatively, in another implementation of the third indication information, the third indication information is a first MAC subheader. If a value of the first MAC subheader is a first value, the UE may be indicated as the device supporting the private function. In this case, the third indication information may not be included in the first RRC request message.

Alternatively, in still another implementation of the third indication information, the third indication information is RRC-layer information. If a value of the RRC-layer information is a second value, the UE may be indicated as the device supporting the private function. The first value may be the same as or different from the second value. In this case, the third indication information may be included in the first RRC request message. For example, the third indication information may be an IE in the first RRC request message. For example, the IE is referred to as a third IE. If a value of the third IE is the second value, the UE is indicated as the device supporting the private function. The third IE is, for example, a spare (spare) IE or a reserved IE in the first RRC request message. When the third IE is not used as the third indication information, the value of the third IE is, for example, "0". In this case, the second value may be "1". To be specific, if the value of the third IE included in the first RRC request message is "1", the UE is indicated as the device supporting the private function.

Optionally, before S501, the method may further include S502: The UE identifies the first access network device, in other words, the UE determines that the first access network device is a device supporting the private function. For more content of S502, refer to S302 in the embodiment shown in FIG. 3.

S503: The first access network device schedules a third resource for the UE.

The first access network device may determine, based on the third indication information, that the UE is the device supporting the private function. In this case, the first access network device may schedule the third resource for the UE. For example, the first access network device sends first scheduling information to the UE, where the first scheduling information may be for scheduling the third resource. After receiving the first scheduling information, the UE may determine the third resource, where the third resource is, for example, an uplink resource. The first scheduling information is, for example, DCI, or may be information of another protocol layer.

In this embodiment of this application, for example, if the UE sends the first RRC request message not through a resource reserved for small data transmission, the UE may not send other uplink information (for example, uplink small data) through a resource reserved for the small data transmission. Therefore, the first access network device may schedule the third resource for the UE.

S504: The UE sends a second RRC request message to the first access network device through the third resource. Correspondingly, the first access network device receives the second RRC request message from the UE through the third resource.

In this embodiment of this application, because the UE does not store the context information, an SRB1 configuration cannot be resumed. Therefore, the UE may send the second RRC request message by using a default (default) SRB 1 configuration, and the first access network device may receive the second RRC request message by using the default SRB1 configuration. For descriptions of the second RRC request message, refer to S306 in the embodiment shown in FIG. 3.

S505: The first access network device sets up a related context of the UE with a first core network device.

For example, the first access network device sends a second request message to the first core network device based on the second RRC request message. Correspondingly, the first core network device receives the second request message from the first access network device. The second request message may be for requesting to set up a connection between the UE and the first core network device.

For more content of S505, refer to S307 in the embodiment shown in FIG. 3.

S506: The first access network device sends information about a security configuration to the UE. Correspondingly, the UE receives the information about the security configuration from the first access network device. The information about the security configuration may indicate the security configuration.

Because neither the first access network device nor the UE stores the context information of the UE, the first access network device may send the information about the security configuration to the UE by using the default SRB1 configuration, and the UE may receive the information about the security configuration by using the default SRB1 configuration. The information about the security configuration includes, for example, encryption information and/or integrity protection information. The UE may perform, by using the security configuration, processing such as encryption and/or integrity protection on to-be-sent uplink data (for example, the uplink small data).

S507: The first access network device schedules a fourth resource for the UE.

The first access network device has sent the information about the security configuration to the UE, and the UE may perform encryption and/or integrity protection on the to-be-sent uplink small data by using the security configuration indicated by the information about the security configuration. In this case, the first access network device may further schedule an uplink resource, for example, the fourth resource, for the UE, so that the UE may send the uplink small data through the fourth resource. For example, the first access network device sends second scheduling information to the UE, where the second scheduling information may be for scheduling the fourth resource. After receiving the second scheduling information, the UE may determine the fourth resource. The second scheduling information is, for example, DCI, or may be information of another protocol layer.

S508: The UE sends the uplink information to the first access network device through the fourth resource. Correspondingly, the first access network device receives the uplink information from the UE through the fourth resource.

The uplink information may include first uplink small data and/or a BSR. After obtaining the information about the security configuration, the UE may perform encryption and/or integrity protection on the first uplink small data and/or the BSR based on the security configuration, to send, to the first access network device through the fourth resource, the first uplink small data and/or the BSR on which the encryption and/or the integrity protection has been performed. Because the UE does not store the context information, a DRB configuration cannot be resumed. Therefore, the UE may send the first uplink small data and/or the BSR by using a default DRB configuration, and the first access network device may receive the first uplink small data and/or the BSR by using the default DRB configuration. The default DRB configuration includes, for example, one or more of the following: a default PDCP configuration (PDCP-Config), a radio link control (radio link control, RLC) -Config, a logical channel identity (logicalChannelIdentity), or a logical channel configuration (LogicalChannelConfig).

If the uplink information includes the BSR but does not include the first uplink small data, the first access network device may schedule a resource for the UE after receiving the BSR, and the UE may send the first uplink small data through the scheduled resource by using the default DRB configuration. The uplink small data transmission process may include one or more times of transmission, in other words, the UE may send the uplink small data to the first access network device for one or more times. The 1^{st} sending process may be initial transmission, and a sending process other than the 1^{st} sending process may be subsequent transmission until the uplink small data is completely sent, or until a sending condition is not met.

Alternatively, if the uplink information includes the first uplink small data, and the first uplink small data is all uplink small data to be sent by the UE, the uplink small data transmission process may end after the first uplink small data is completely transmitted. If the UE still has other to-be-sent uplink small data in addition to the first uplink small data, the UE may continue to send the other uplink small data to the first access network device until the uplink small data is completely sent, or until a sending condition is not met. Similarly, the uplink small data transmission process may also include one or more times of transmission.

If the uplink small data transmission process includes a plurality of times of transmission, before a next time of transmission starts, the first access network device may schedule a resource for the UE, and the UE may perform the next time of transmission through the resource.

Optionally, the first access network device may further send the received uplink small data to a second core network device, for example, a UPF.

S509: The first access network device sends a second RRC release message to the UE. Correspondingly, the UE receives the second RRC release message from the first access network device. The second RRC release message may be for releasing the UE to the RRC non-connected state.

If the small data transmission ends, the first access network device may send the second RRC release message to the UE. The second RRC release message is, for example, an RRC release message, an RRC connection release message, or signaling, for example, HPS, supported by the UE supporting the private function. Alternatively, the second RRC release message may be another message having a similar function.

Optionally, the second RRC release message may further include information such as a first identifier of the UE and/or an NCC. After receiving the second RRC release message, the UE enters the RRC non-connected state. Because the second RRC release message does not include suspend indication information, the UE releases the context information of the UE. In addition, the first access network device also releases the context information of the UE.

Optionally, if the first access network device still has downlink small data to be sent to the UE, the first access network device may send the downlink small data to the UE together with the second RRC release message in S309.

This embodiment of this application provides a solution in which the UE supporting the private function performs small data transmission, so that such a UE can implement the data transmission without entering an RRC connected state, to reduce signaling overheads. In addition, regardless of whether the UE is in an RRC inactive state or an RRC idle state and whether the UE is in the NR system, the LTE system, or another system, the UE of any type can perform small data transmission in any current application scenario. This reduces the signaling overheads to a large extent, so that more UEs can perform small data transmission without entering the RRC connected state, to reduce a data transmission delay. In addition, a quantity of small data transmission times is not limited in this embodiment of this application, and transmission may be performed for one or more times, so that transmission of more small data can be implemented. In this embodiment of this application, when the UE is released to the RRC non-connected state, neither the UE nor the access network device needs to retain the context information of the UE. This helps save storage space of the UE and the access network device.

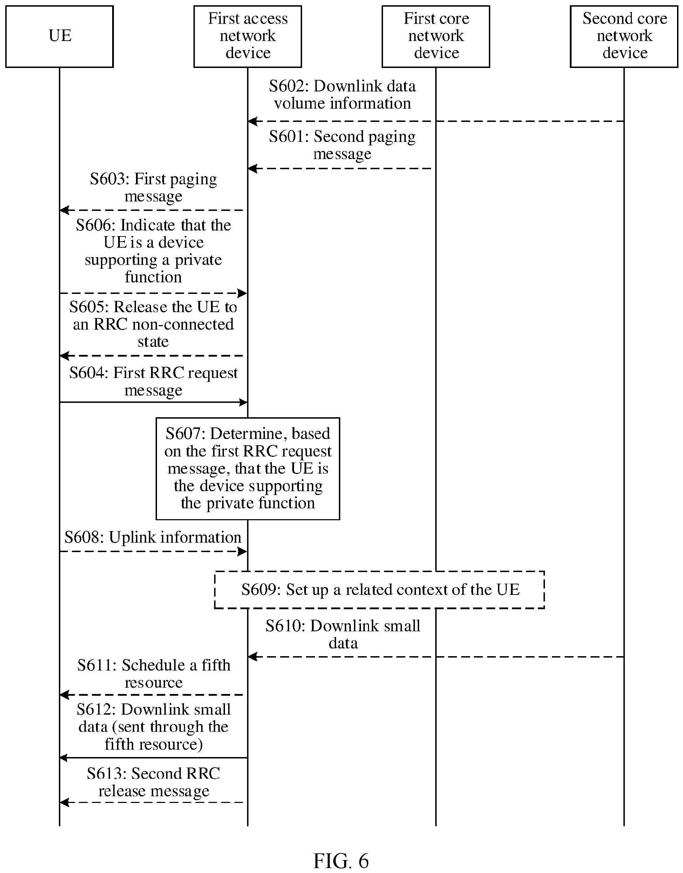

All the foregoing embodiments relate to the uplink small data transmission. The following embodiment of this application provides a fourth communication method, and the method relates to downlink small data transmission. FIG. 6 is a flowchart of the method. The method may be applied to the network architecture shown in FIG. 2A. For example, a UE in the method is the UE in FIG. 2A, and a first access network device in the method is the access network device in FIG. 2A. In this embodiment of this application, the first access network device is an anchor access network device of the UE.

S601: A first core network device sends a second paging (paging) message to the first access network device. Correspondingly, the first access network device receives the second paging message from the first core network device. The first core network device is, for example, an AMF, or may be another core network device.

When there is to-be-sent downlink data, the first core network device may send a paging message to the first access network device. The paging message is referred to as the second paging message in this embodiment of this application. The second paging message includes, for example, an identifier of a to-be-paged UE.

Optionally, the method further includes S602: A second core network device sends downlink data volume information to the first access network device. Correspondingly, the first access network device receives the downlink data volume information from the second core network device. The downlink data volume information may indicate a data volume of the to-be-sent downlink data. The second core network device may directly send the downlink data volume information to the first access network device. Alternatively, the second core network device may send the downlink data volume information to the first core network device, and then the first core network device sends the downlink data volume information to the first access network device. The second core network device is, for example, a UPF, or is another core network device. For example, S602 occurs before S601 or after S601, or simultaneously occurs with S601.

S603: The first access network device sends a first paging message. Correspondingly, the UE may receive the first paging message.

After receiving the second paging message, the first access network device may send the first paging message, to page the UE. The first paging message may page one or more UEs, and includes, for example, information such as the identifier of the to-be-paged UE. For example, the first paging message is sent in a broadcast manner. Therefore, a plurality of UEs may receive the first paging message. In this embodiment of this application, one of the UEs is used as an example.

Optionally, before S603, the first access network device may further determine whether to perform small data transmission. For example, if the first access network device obtains the downlink data volume information through S602, the first access network device may determine, based on the downlink data volume indicated by the downlink data volume information, whether to perform the small data transmission process. For example, if the downlink data volume is greater than or equal to a first threshold, the first access network device determines not to perform small data transmission, but may indicate the UE to enter an RRC connected state to receive the downlink data. Alternatively, if the downlink data volume is less than a first threshold, the first access network device may perform the small data transmission process, and the UE may receive the downlink data without entering an RRC connected state. For example, the first threshold is set by the first access network device, is set by a core network device (for example, set by the first core network device or the second core network device and notified to the first access network device), or is predefined in a protocol.

For another example, after obtaining a tunnel address between the second core network device and the first access network device, the second core network device may send the to-be-sent downlink data to the first access network device. In this case, the first access network device may determine, based on the data volume of the downlink data, whether to perform small data transmission. For a determining manner, refer to the previous paragraph.

An example in which the first access network device determines to perform small data transmission is used in the following steps in this embodiment of this application. If the first access network device determines to perform small data transmission, optionally, the first paging message may carry fourth indication information, and the fourth indication information may indicate the downlink small data transmission. For example, the fourth indication information is a mobile terminated small data transmission (mobile terminated small data transmission, MT-SDT) indication. The paged UE may learn, by using the fourth indication information, that the downlink small data transmission needs to be performed. Alternatively, even if the first access network device determines to perform small data transmission, the first paging message may not carry fourth indication information. This is not specifically limited.

Optionally, before S603, the UE may further identify the first access network device, in other words, the UE determines that the first access network device is a device supporting a private function. For this step, refer to S302 in the embodiment shown in FIG. 3.

S604: The UE sends a first RRC request message to the first access network device. Correspondingly, the first access network device receives the first RRC request message from the UE. If a UE determines that the UE is paged by using the first paging message, the UE may perform S604.

Optionally, the method may further include S605: The first access network device sends a first RRC release message to the UE. Correspondingly, the UE receives the first RRC release message, where the first RRC release message may be for releasing the UE to an RRC non-connected state. For more content of S605, refer to S303 in the embodiment shown in FIG. 3.

Optionally, before S605, the method may further include S606: The UE sends second indication information to the first access network device. Correspondingly, the first access network device receives the second indication information from the UE. The second indication information may indicate that the UE is a UE supporting the private function. For more content of S606, refer to S304 in the embodiment shown in FIG. 3.

In this embodiment of this application, the UE is, for example, the device supporting the private function. In addition, this embodiment of this application is applicable to both an NR system and an LTE system. For more descriptions of this content, refer to S301 in the embodiment shown in FIG. 3.

In addition, for more content of S604, refer to S301 in the embodiment shown in FIG. 3.

S607: The first access network device determines, based on the first RRC request message, that the UE is the device supporting the private function.

For more content of S607, refer to S305 in the embodiment shown in FIG. 3.

Alternatively, the first access network device may determine, based on the second paging message in S601, that the to-be-paged UE is the device supporting the private function. For example, the second paging message includes the identifier of the to-be-paged UE, and the identifier is, for example, a first identifier, or may be another identifier of the UE. The first access network device may identify these identifiers, and determine, based on these identifiers, that the corresponding UE is the device supporting the private function. If the second paging message includes the another identifier of the UE instead of the first identifier, for example, there is an association relationship between the first identifier of the UE and the another identifier of the UE (for example, both the first identifier and the another identifier are included in context information of the UE), the first access network device can determine, based on the identifier included in the second paging message, whether the to-be-paged UE is the device supporting the private function. In this case, S607 may not be performed. Instead, after S601, the first access network device may determine, based on the second paging message, that the to-be-paged UE is the UE supporting the private function.

S608: The UE sends uplink information to the first access network device. Correspondingly, the first access network device receives the uplink information from the UE.

The uplink information may include a second RRC request message. Optionally, if the UE also has to-be-sent uplink small data, the uplink information may further include second uplink small data and/or a BSR.

For more content of S608, refer to S306 in the embodiment shown in FIG. 3.

S609: The first access network device sets up a related context of the UE with the first core network device.

For example, the first access network device sends a second request message to the first core network device based on the second RRC request message. Correspondingly, the first core network device receives the second request message from the first access network device. The second request message may be for requesting to set up a connection between the UE and the first core network device.

For more content of S609, refer to S307 in the embodiment shown in FIG. 3.

S610: The second core network device sends downlink small data to the first access network device. Correspondingly, the first access network device receives the downlink small data from the second core network device.

The second core network device is, for example, the UPF, or may be the another core network device. The second core network device may send the to-be-sent downlink small data to the first access network device, so that the first access network device sends the downlink small data to the UE.

In some embodiments, the first access network device sends the first paging message to the UE only after obtaining the downlink small data from the second core network device. In this case, S610 may not be performed.

S611: The first access network device schedules a fifth resource for the UE. The fifth resource is, for example, a downlink resource.

For example, the first access network device sends third scheduling information to the UE, where the third scheduling information may be for scheduling the fifth resource. After receiving the third scheduling information, the UE may determine the fifth resource. The third scheduling information is, for example, DCI, or may be information of another protocol layer.

S612: The first access network device sends the downlink small data to the UE through the fifth resource. Correspondingly, the UE receives the downlink small data from the first access network device through the fifth resource.

In this embodiment of this application, the downlink small data transmission process may include one or more times of transmission, in other words, the first access network device may send the downlink small data to the UE for one or more times until the downlink small data is completely sent, or until a sending condition is not met. S612 is, for example, one transmission process in the downlink small data transmission process. If the downlink small data transmission process includes a plurality of times of transmission, before a next time of transmission starts, the first access network device may schedule a resource for the UE, and the UE and the first access network device may perform the next time of transmission through the resource.

In this embodiment of this application, the UE may further send an uplink response message to the first access network device. Correspondingly, the base station receives the uplink response message from the UE. For example, when uplink feedback is needed for the downlink small data, the UE may send the uplink response message corresponding to the downlink small data to the first access network device. The uplink response message is, for example, an uplink response (UL response).

S613: The first access network device sends a second RRC release message to the UE. Correspondingly, the UE receives the second RRC release message from the first access network device.

For more content of S613, refer to S309 in the embodiment shown in FIG. 3.

S603 to S613 use an example in which the downlink small data transmission is performed. Before S603, the access network device may alternatively determine not to perform downlink small data transmission. In this case, if the access network device determines not to perform downlink small data transmission, the first paging message in S603 does not carry the fourth indication information, and S605 to S613 may not be performed after S604 is performed. Instead, after receiving the first RRC request message, the first access network device may send a first RRC message to the UE, so that the UE enters the RRC connected state. In addition, the first access network device may delete the previously stored context information of the UE. After the UE enters the RRC connected state, the first access network device may send downlink data to the UE. The first RRC message is, for example, an RRC reconfiguration (RRC reconfiguration) message, an RRC connection reconfiguration (RRC connection reconfiguration) message, an RRC resume (RRC resume) message, or an RRC connection resume (RRC connection resume) message.

Optionally, if the access network device determines, before S603, to perform downlink small data transmission, the subsequent steps described above may continue to be performed. In an execution process, if new downlink data arrives, and the first access network device determines that a data volume of the new downlink data is greater than or equal to the first threshold, the first access network device may also send a first RRC message to enable the UE to enter the RRC connected state.

It can be learned that the first access network device may flexibly determine, based on a status of the to-be-sent downlink data, whether to select a small data transmission mode or a data transmission mode in the RRC connected state, to help improve a success rate of sending the downlink data.

This embodiment of this application provides a solution in which the UE supporting the private function performs small data transmission, so that such a UE can implement the data transmission without entering the RRC connected state, to reduce signaling overheads. In addition, regardless of whether the UE is in an RRC inactive state or an RRC idle state and whether the UE is in the NR system, the LTE system, or another system, the UE of any type can perform small data transmission in any current application scenario. This reduces the signaling overheads to a large extent, so that more UEs can perform small data transmission without entering the RRC connected state, to reduce a data transmission delay. In addition, a quantity of small data transmission times is not limited in this embodiment of this application, and transmission may be performed for one or more times, so that transmission of more small data can be implemented.

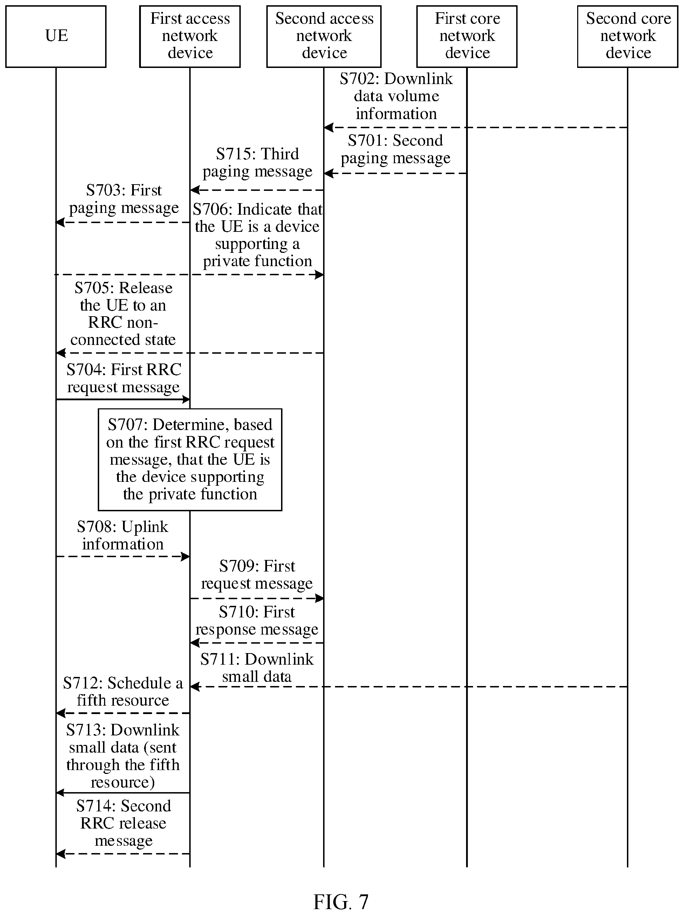

The following embodiment of this application provides a fifth communication method. The method also relates to downlink small data transmission. FIG. 7 is a flowchart of the method. The method may be applied to the network architecture shown in FIG. 2B. For example, a UE in the method is the UE in FIG. 2B, a first access network device in the method is the access network device 2 in FIG. 2B, and a second access network device in the method is the access network device 1 in FIG. 2B. In this embodiment of this application, the first access network device is a serving access network device of the UE, and the second access network device is an anchor access network device of the UE.

S701: A first core network device sends a second paging message to the second access network device. Correspondingly, the second access network device receives the second paging message from the first core network device.

For more content of S701, refer to S601 in the embodiment shown in FIG. 6.

Optionally, the method further includes S702: A second core network device sends downlink data volume information to the second access network device. Correspondingly, the second access network device receives the downlink data volume information from the second core network device. For more content of S702, refer to S602 in the embodiment shown in FIG. 6.

S703: The first access network device sends a first paging message. Correspondingly, the UE may receive the first paging message.

For more content of S703, refer to S603 in the embodiment shown in FIG. 6.

Optionally, before S703, the method further includes S715: The second access network device may further send a third paging message to the first access network device. Correspondingly, the first access network device receives the third paging message from the second access network device. The third paging message may be for paging the UE. For example, the third paging message may include information such as an identifier of the to-be-paged UE. After receiving the third paging message, the first access network device may send the first paging message to the UE based on the third paging message. Optionally, the first access network device or the second access network device may determine to perform small data transmission. This is not limited in this embodiment of this application.

S704: The UE sends a first RRC request message to the first access network device. Correspondingly, the first access network device receives the first RRC request message from the UE. If the UE determines that the UE is paged by using the first paging message, the UE may perform S704.

Optionally, the method may further include S705: The second access network device sends a first RRC release message to the UE. Correspondingly, the UE receives the first RRC release message, where the first RRC release message may be for releasing the UE to an RRC non-connected state. For more content of S705, refer to S403 in the embodiment shown in FIG. 4.

Optionally, before S705, the method may further include S706: The UE sends second indication information to the second access network device. Correspondingly, the second access network device receives the second indication information from the UE. The second indication information may indicate that the UE is a device supporting a private function. For more content of S706, refer to S304 in the embodiment shown in FIG. 3.

In this embodiment of this application, the UE is, for example, the device supporting the private function. In addition, this embodiment of this application is applicable to both an NR system and an LTE system. For more descriptions of this content, refer to S301 in the embodiment shown in FIG. 3.

In addition, for more content of S704, refer to S301 in the embodiment shown in FIG. 3.

S707: The first access network device determines, based on the first RRC request message, that the UE is the device supporting the private function.

For more content of S707, refer to S405 in the embodiment shown in FIG. 4.

Alternatively, the first access network device may determine, based on the third paging message in S715, that the to-be-paged UE is the device supporting the private function. For example, the third paging message includes the identifier of the to-be-paged UE, and the identifier is, for example, a first identifier, or may be another identifier of the UE. The first access network device may identify these identifiers, and determine, based on these identifiers, that the corresponding UE is the device supporting the private function. If the third paging message includes the another identifier of the UE instead of the first identifier, for example, there is an association relationship between the first identifier of the UE and the another identifier of the UE (for example, both the first identifier and the another identifier are included in context information of the UE), the first access network device can determine, based on the identifier included in the third paging message, whether the to-be-paged UE is the device supporting the private function. In this case, S707 may not be performed. Instead, after S701, the first access network device may determine, based on the third paging message, that the to-be-paged UE is the UE supporting the private function.

S708: The UE sends uplink information to the first access network device.

The uplink information may include a second RRC request message. Optionally, if the UE also has to-be-sent uplink small data, the uplink information may further include second uplink small data and/or a BSR. In this embodiment of this application, because the first access network device does not store the context information of the UE in this case, the first access network device cannot read the small data and/or the BSR included in the uplink information.

For more content of S708, refer to S406 in the embodiment shown in FIG. 4.

S709: The first access network device sends first request information to the second access network device. Correspondingly, the second access network device receives the first request information from the first access network device. The first request information may be for requesting the context information of the UE.

For more content of S709, refer to S407 in the embodiment shown in FIG. 4.

S710: The second access network device sends first response information to the first access network device. Correspondingly, the first access network device receives the first response information from the second access network device. The first response information is, for example, response information for the first request information.

For more content of S710, refer to S409 in the embodiment shown in FIG. 4.

S711: The second core network device sends downlink small data to the first access network device. Correspondingly, the first access network device receives the downlink small data from the second core network device. Alternatively, the second access network device sends downlink small data to the first access network device. Correspondingly, the first access network device receives the downlink small data from the second access network device. FIG. 7 uses an example in which the second core network device sends the downlink small data to the first access network device.

The second core network device is, for example, a UPF, or may be another core network device. For example, the second core network device may send the to-be-sent downlink small data to the first access network device, so that the first access network device sends the downlink small data to the UE. For another example, before the first access network device sends the first paging message to the UE, the downlink small data has arrived at the second access network device. In this case, the first access network device may obtain the downlink small data from the second access network device.

S712: The first access network device schedules a fifth resource for the UE. The fifth resource is, for example, a downlink resource.

For example, the first access network device sends third scheduling information to the UE, where the third scheduling information may be for scheduling the fifth resource. After receiving the third scheduling information, the UE may determine the fifth resource. The third scheduling information is, for example, DCI, or may be information of another protocol layer.

S713: The first access network device sends the downlink small data to the UE through the fifth resource. Correspondingly, the UE receives the downlink small data from the first access network device through the fifth resource.

For more content of S713, refer to S612 in the embodiment shown in FIG. 6.

S714: The first access network device sends a second RRC release message to the UE. Correspondingly, the UE receives the second RRC release message from the first access network device.

For more content of S714, refer to S309 in the embodiment shown in FIG. 3.

S703 to S714 use an example in which the downlink small data transmission is performed. Before S703, the access network device may alternatively determine not to perform downlink small data transmission. In this case, if the access network device determines not to perform downlink small data transmission, the first paging message in S703 does not carry fourth indication information, and S705 to S714 may not be performed after S704 is performed. Instead, after receiving the first RRC request message, the first access network device may send a first RRC message to the UE, so that the UE enters an RRC connected state. After the UE enters the RRC connected state, the first access network device may send downlink data to the UE. The first RRC message is, for example, an RRC reconfiguration (RRC reconfiguration) message, an RRC connection reconfiguration (RRC connection reconfiguration) message, an RRC resume (RRC resume) message, or an RRC connection resume (RRC connection resume) message.

Optionally, if the access network device determines, before S703, to perform downlink small data transmission, the subsequent steps described above may continue to be performed. In an execution process, if new downlink data arrives, and the first access network device determines that a data volume of the new downlink data is greater than or equal to a first threshold, the first access network device may also send a first RRC message to enable the UE to enter the RRC connected state.

It can be learned that the first access network device may flexibly determine, based on a status of the to-be-sent downlink data, whether to select a small data transmission mode or a data transmission mode in the RRC connected state, to help improve a success rate of sending the downlink data.

This embodiment of this application provides a solution in which the UE supporting the private function performs small data transmission, so that such a UE can implement the data transmission without entering the RRC connected state, to reduce signaling overheads. In addition, regardless of whether the UE is in an RRC inactive state or an RRC idle state and whether the UE is in the NR system, the LTE system, or another system, the UE of any type can perform small data transmission in any current application scenario. This reduces the signaling overheads to a large extent, so that more UEs can perform small data transmission without entering the RRC connected state, to reduce a data transmission delay. In addition, a quantity of small data transmission times is not limited in this embodiment of this application, and transmission may be performed for one or more times, so that transmission of more small data can be implemented. In addition, even if the UE in the RRC non-connected state moves, the UE can still perform small data transmission in coverage of the serving access network device after the movement. It can be learned that, according to the technical solution in this embodiment of this application, the signaling overheads can be reduced in more scenarios.

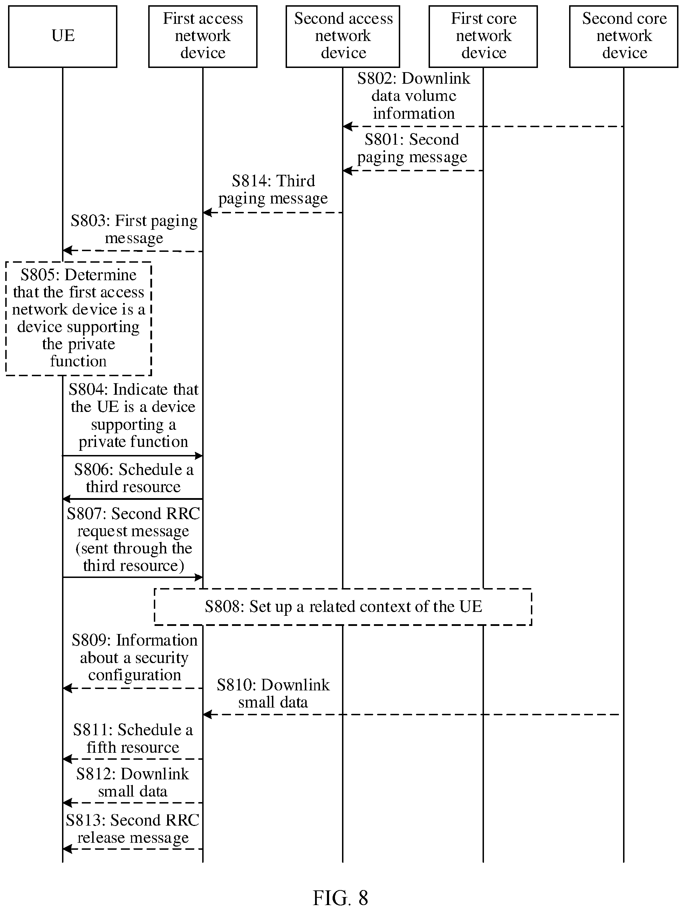

In the embodiment shown in FIG. 6 and the embodiment shown in FIG. 7, the UE retains the context information of the UE when the UE is in the RRC non-connected state, so that the UE can resume a corresponding configuration, for example, resume the radio bearer configuration described in S301 in the embodiment shown in FIG. 3, based on the context information. In another possibility, the UE does not store the context information of the UE after being released to the RRC non-connected state. To implement small data transmission of the UE in this case, an embodiment of this application provides a sixth communication method. FIG. 8 is a flowchart of the method. The method may be applied to the network architecture shown in FIG. 2A. For example, a UE in the method is the UE in FIG. 2A, and a first access network device in the method is the access network device in FIG. 2A. In this embodiment of this application, the first access network device may be an anchor access network device of the UE, and may be a serving access network device on which the UE camps after being released to an RRC non-connected state. The embodiment shown in FIG. 8 protects a downlink small data transmission process.

S801: A first core network device sends a second paging message to a second access network device. Correspondingly, the second access network device receives the second paging message from the first core network device.

For more content of S801, refer to S601 in the embodiment shown in FIG. 6.

Optionally, the method further includes S802: A second core network device sends downlink data volume information to the second access network device. Correspondingly, the second access network device receives the downlink data volume information from the second core network device. For more content of S802, refer to S602 in the embodiment shown in FIG. 6.

S803: The first access network device sends a first paging message. Correspondingly, the UE may receive the first paging message.

For more content of S803, refer to S603 in the embodiment shown in FIG. 6.

Optionally, before S803, the method further includes S814: The second access network device may further send a third paging message to the first access network device. Correspondingly, the first access network device receives the third paging message from the second access network device. For this, refer to S715 in the embodiment shown in FIG. 7.

S804: The UE sends third indication information to the first access network device. Correspondingly, the first access network device receives the third indication information from the UE. If the UE determines that the UE is paged by using the first paging message, the UE may perform S804.

Optionally, before S804, the method may further include S805: The UE identifies the first access network device, in other words, the UE determines that the first access network device is a device supporting a private function. For more content of S805, refer to S302 in the embodiment shown in FIG. 3.

For more content of S804, refer to S501 in the embodiment shown in FIG. 5.

Alternatively, the first access network device may determine, based on the second paging message in S801, that the to-be-paged UE is a device supporting the private function. For example, the second paging message includes an identifier of the to-be-paged UE, and the identifier is, for example, a first identifier, or may be another identifier of the UE. The first access network device may identify these identifiers, and determine, based on these identifiers, that the corresponding UE is the device supporting the private function. If the second paging message includes the another identifier of the UE instead of the first identifier, for example, there is an association relationship between the first identifier of the UE and the another identifier of the UE (for example, both the first identifier and the another identifier are included in context information of the UE), the first access network device can determine, based on the identifier included in the second paging message, whether the to-be-paged UE is the device supporting the private function. In this case, in S804, the UE may not send the third indication information, but may still send a first RRC request message. In addition, after S801, the first access network device may determine, based on the second paging message, that the to-be-paged UE is the UE supporting the private function.

In this embodiment of this application, the UE is, for example, the device supporting the private function. In addition, this embodiment of this application is applicable to both an NR system and an LTE system. For more descriptions of this content, refer to S301 in the embodiment shown in FIG. 3.

S806: The first access network device schedules a third resource for the UE.

For more content of S806, refer to S503 in the embodiment shown in FIG. 5.

S807: The UE sends a second RRC request message to the first access network device through the third resource. Correspondingly, the first access network device receives the second RRC request message from the UE through the third resource.

For more content of S807, refer to S504 in the embodiment shown in FIG. 5.

S808: The first access network device sets up a related context of the UE with the first core network device.

For example, the first access network device sends a second request message to the first core network device based on the second RRC request message. Correspondingly, the first core network device receives the second request message from the first access network device. The second request message may be for requesting to set up a connection between the UE and the first core network device.

For more content of S808, refer to S307 in the embodiment shown in FIG. 3.

S809: The first access network device sends information about a security configuration to the UE. Correspondingly, the UE receives the information about the security configuration from the first access network device. The information about the security configuration may indicate the security configuration.

For more content of S809, refer to S506 in the embodiment shown in FIG. 5.

S810: The second core network device sends downlink small data to the first access network device. Correspondingly, the first access network device receives the downlink small data from the second core network device. Alternatively, the second access network device sends downlink small data to the first access network device. Correspondingly, the first access network device receives the downlink small data from the second access network device. FIG. 8 uses an example in which the second core network device sends the downlink small data to the first access network device.

The second core network device is, for example, a UPF, or may be another core network device. For example, the second core network device may send the to-be-sent downlink small data to the first access network device, so that the first access network device sends the downlink small data to the UE. For another example, before the first access network device sends the first paging message to the UE, the downlink small data has arrived at the second access network device. In this case, the first access network device may obtain the downlink small data from the second access network device.

S811: The first access network device schedules a fifth resource for the UE. The fifth resource is, for example, a downlink resource.

For example, the first access network device sends third scheduling information to the UE, where the third scheduling information may be for scheduling the fifth resource. After receiving the third scheduling information, the UE may determine the fifth resource. The third scheduling information is, for example, DCI, or may be information of another protocol layer.

S812: The first access network device sends the downlink small data to the UE through the fifth resource. Correspondingly, the UE receives the downlink small data from the first access network device through the fifth resource.

For more content of S812, refer to S612 in the embodiment shown in FIG. 6.

S813: The first access network device sends a second RRC release message to the UE. Correspondingly, the UE receives the second RRC release message from the first access network device.

For more content of S813, refer to S309 in the embodiment shown in FIG. 3.

S803 to S813 use an example in which the downlink small data transmission is performed. Before S803, the access network device may alternatively determine not to perform downlink small data transmission. In this case, if the access network device determines not to perform downlink small data transmission, the first paging message in S803 does not carry fourth indication information; and when S804 is performed, the UE may not send the third indication information, but may send the first RRC request message. In addition, S805 to S813 may not be performed subsequently, but the first access network device may send a second RRC message to the UE after receiving the first RRC request message, so that the UE enters an RRC connected state. After the UE enters the RRC connected state, the first access network device may send downlink data to the UE. The second RRC message is, for example, an RRC setup (RRC setup) message or an RRC connection setup (RRC connection setup) message.

Optionally, if the access network device determines, before S803, to perform downlink small data transmission, the subsequent steps described above may continue to be performed. In an execution process, if new downlink data arrives, and the first access network device determines that a data volume of the new downlink data is greater than or equal to a first threshold, the first access network device may also send a second RRC message to enable the UE to enter the RRC connected state.

It can be learned that the first access network device may flexibly determine, based on a status of the to-be-sent downlink data, whether to select a small data transmission mode or a data transmission mode in the RRC connected state, to help improve a success rate of sending the downlink data.

This embodiment of this application provides a solution in which the UE supporting the private function performs small data transmission, so that such a UE can implement the data transmission without entering the RRC connected state, to reduce signaling overheads. In addition, regardless of whether the UE is in an RRC inactive state or an RRC idle state and whether the UE is in the NR system, the LTE system, or another system, the UE of any type can perform small data transmission in any current application scenario. This reduces the signaling overheads to a large extent, so that more UEs can perform small data transmission without entering the RRC connected state, to reduce a data transmission delay. In addition, a quantity of small data transmission times is not limited in this embodiment of this application, and transmission may be performed for one or more times, so that transmission of more small data can be implemented. In this embodiment of this application, when the UE is released to the RRC non-connected state, neither the UE nor the access network device needs to retain the context information of the UE. This helps save storage space of the UE and the access network device.

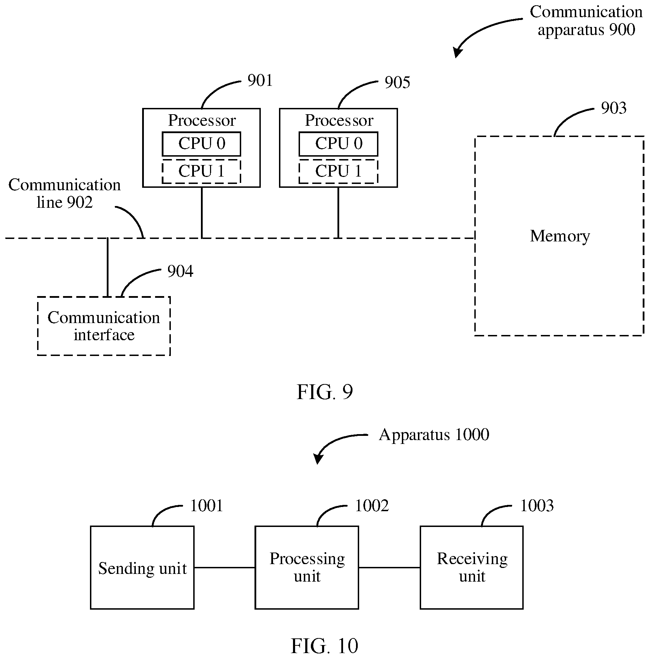

FIG. 9 is a diagram of a structure of a communication apparatus according to an embodiment of this application. The communication apparatus 900 may be the first access network device in the embodiment shown in any one of FIG. 3 to FIG. 8 or a circuit system of the first access network device, and is configured to implement the method corresponding to the first access network device in the foregoing method embodiment. Alternatively, the communication apparatus 900 may be the second access network device in the embodiment shown in any one of FIG. 3 to FIG. 8 or a circuit system of the second access network device, and is configured to implement the method corresponding to the second access network device in the foregoing method embodiment. Alternatively, the communication apparatus 900 may be a circuit system of the UE in the embodiment shown in any one of FIG. 3 to FIG. 8, and is configured to implement the method corresponding to the UE in the foregoing method embodiment. For specific functions, refer to the descriptions in the foregoing method embodiment. For example, the circuit system is a chip system.

The communication apparatus 900 includes at least one processor 901. The processor 901 may be configured to perform internal processing of the apparatus, to implement a specific control processing function. Optionally, the processor 901 includes instructions. Optionally, the processor 901 may store data. Optionally, different processors may be independent components; and may be located at different physical locations, or may be located on different integrated circuits. Optionally, different processors may be integrated into one or more processors, for example, integrated into one or more integrated circuits.

Optionally, the communication apparatus 900 includes one or more memories 903, configured to store instructions. Optionally, the memory 903 may further store data. The processor and the memory may be separately disposed, or may be integrated together.

Optionally, the communication apparatus 900 includes a communication line 902 and at least one communication interface 904. Because the memory 903, the communication line 902, and the communication interface 904 are all optional, the memory 903, the communication line 902, and the communication interface 904 are all represented by dashed lines in FIG. 9.

Optionally, the communication apparatus 900 may further include a transceiver and/or an antenna. The transceiver may be configured to send information to another apparatus or receive information from another apparatus. The transceiver may be referred to as a transceiver circuit, an input/output interface, or the like, and is configured to implement a transceiver function of the communication apparatus 900 through the antenna. Optionally, the transceiver includes a transmitter (transmitter) and a receiver (receiver). For example, the transmitter may be configured to generate a radio frequency (radio frequency) signal based on a baseband signal, and the receiver may be configured to convert the radio frequency signal into the baseband signal.

The processor 901 may include a general-purpose central processing unit (central processing unit, CPU), a microprocessor, an application-specific integrated circuit (application-specific integrated circuit, ASIC), or one or more integrated circuits for controlling program execution for the solutions of this application.

The communication line 902 may include a path through which information is transmitted between the foregoing components.

The communication interface 904 uses any transceiver-type apparatus, to communicate with another device or a communication network, for example, the Ethernet, a radio access network (radio access network, RAN), a wireless local area network (wireless local area network, WLAN), or a wired access network.

The memory 903 may be a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray optical disc, and the like), a magnetic disk storage medium or another magnetic storage device, or any other medium that can carry or store expected program code in a form of instruction or data structure and that can be accessed by a computer. However, the memory 903 is not limited thereto. The memory 903 may exist independently, and is connected to the processor 901 through the communication line 902. Alternatively, the memory 903 may be integrated with the processor 901.

The memory 903 is configured to store computer-executable instructions for performing the solutions in this application, and the computer-executable instructions are executed under control of the processor 901. The processor 901 is configured to execute the computer-executable instructions stored in the memory 903, to implement the communication method provided in the foregoing embodiments of this application.

Optionally, the computer-executable instructions in this embodiment of this application may also be referred to as application program code. This is not specifically limited in this embodiment of this application.

During specific implementation, in an embodiment, the processor 901 may include one or more CPUs such as a CPU 0 and a CPU 1 in FIG. 9.

During specific implementation, in an embodiment, the communication apparatus 900 may include a plurality of processors, for example, the processor 901 and a processor 905 in FIG. 9. Each of the processors may be a single-core (single-CPU) processor, or may be a multi-core (multi-CPU) processor. The processor herein may be one or more devices, circuits, and/or processing cores configured to process data (for example, computer program instructions).

When the apparatus shown in FIG. 9 is a chip, for example, a chip of the first access network device, a chip of the second access network device, or a chip of the UE, the chip includes the processor 901 (and may further include the processor 905), the communication line 902, the memory 903, and the communication interface 904. Specifically, the communication interface 904 may be an input interface, a pin, a circuit, or the like. The memory 903 may be a register, a cache, or the like. The processor 901 and the processor 905 may each be a general-purpose CPU, a microprocessor, an ASIC, or one or more integrated circuits configured to control program execution for the communication method in any one of the foregoing embodiments.

In embodiments of this application, the apparatus may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, module division is an example, and is merely a logical function division. During actual implementation, another division manner may be used. For example, when each functional module is obtained through division based on each corresponding function, FIG. 10 is a diagram of an apparatus. The apparatus 1000 may be the first access network device, the second access network device, or the UE in the foregoing method embodiments, or may be a chip in the first access network device, a chip in the second access network device, or a chip in the UE. The apparatus 1000 includes a sending unit 1001, a processing unit 1002, and a receiving unit 1003.

It should be understood that the apparatus 1000 may be configured to implement the steps performed by the first access network device, the second access network device, or the UE in the methods in embodiments of this application. For related features, refer to the foregoing embodiments. Details are not described herein again.

Optionally, functions/implementation processes of the sending unit 1001, the receiving unit 1003, and the processing unit 1002 in FIG. 10 may be implemented by the processor 901 in FIG. 9 by invoking the computer-executable instructions stored in the memory 903. Alternatively, a function/an implementation process of the processing unit 1002 in FIG. 10 may be implemented by the processor 901 in FIG. 9 by invoking the computer-executable instructions stored in the memory 903, and functions/implementation processes of the sending unit 1001 and the receiving unit 1003 in FIG. 10 may be implemented by the communication interface 904 in FIG. 9.

Optionally, when the apparatus 1000 is the chip or a circuit, functions/implementation processes of the sending unit 1001 and the receiving unit 1003 may alternatively be implemented by a pin, a circuit, or the like.

This application further provides a computer-readable storage medium. The computer-readable storage medium stores a computer program or instructions. When the computer program or the instructions are run, the method performed by the first access network device, the second access network device, or the UE in the foregoing method embodiments is implemented. In this way, the functions in the foregoing embodiments may be implemented in a form of a software functional unit and sold or used as an independent product. Based on such an understanding, the technical solutions of this application essentially, the part contributing to the prior art, or a part of the technical solutions may be implemented in a form of a software product. The computer software product is stored in a storage medium, and includes several instructions for instructing a computer device (which may be a personal computer, a server, a network device, or the like) to perform all or a part of the steps of the methods described in embodiments of this application. The storage medium includes any medium that can store program code, such as a USB flash drive, a removable hard disk, a ROM, a RAM, a magnetic disk, or an optical disc.

This application further provides a computer program product. The computer program product includes computer program code. When the computer program code is run on a computer, the computer is enabled to perform the method performed by the first access network device, the second access network device, or the UE in any one of the foregoing method embodiments.

An embodiment of this application further provides a processing apparatus, including a processor and an interface. The processor is configured to perform the method performed by the first access network device, the second access network device, or the UE in any one of the foregoing method embodiments.

All or some of the foregoing embodiments may be implemented by software, hardware, firmware, or any combination thereof. When software is used to implement the embodiments, all or a part of the embodiments may be implemented in a form of a computer program product. The computer program product includes one or more computer instructions. When the computer program instructions are loaded and executed on a computer, the procedures or functions according to embodiments of this application are all or partially generated. The computer may be a general-purpose computer, a special-purpose computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like.

The illustrative logical units and circuits described in embodiments of this application may implement or operate the described functions through a general-purpose processor, a digital signal processor (digital signal processor, DSP), an application-specific integrated circuit (application-specific integrated circuit, ASIC), a field-programmable gate array (field-programmable gate array, FPGA) or another programmable logic apparatus, a discrete gate or a transistor logic device, a discrete hardware component, or a design of any of the foregoing combinations. The general-purpose processor may be a microprocessor. Optionally, the general-purpose processor may be any conventional processor, controller, microcontroller, or state machine. The processor may alternatively be implemented by a combination of computing apparatuses, such as a digital signal processor and a microprocessor, multiple microprocessors, one or more microprocessors with a digital signal processor core, or any other similar configuration.

Steps of the methods or algorithms described in embodiments of this application may be directly embedded into hardware, a software unit executed by a processor, or a combination thereof. The software unit may be stored in a RAM, a flash memory, a ROM, an erasable programmable read-only memory (erasable programmable read-only memory, EPROM), an EEPROM, a register, a hard disk, a removable magnetic disk, a CD-ROM, or any other form of storage medium in the art. For example, the storage medium may be connected to the processor, so that the processor may read information from the storage medium and write information to the storage medium. Optionally, the storage medium may be integrated into the processor. The processor and the storage medium may be disposed in an ASIC, and the ASIC may be disposed in a terminal device. Optionally, the processor and the storage medium may be disposed in different parts of the terminal device.

These computer program instructions may alternatively be loaded onto a computer or another programmable data processing device, so that a series of operations and steps are performed on the computer or the another programmable device, to generate computer-implemented processing. Therefore, the instructions executed on the computer or the another programmable device provide steps for implementing a specific function in one or more processes in the flowcharts and/or in one or more blocks in the block diagrams.

Although embodiments of this application are described with reference to specific features and embodiments thereof, it is clear that various modifications and combinations may be made to embodiments of this application without departing from the scope of embodiments of this application. Correspondingly, embodiments of this application and the accompanying drawings are merely example descriptions of embodiments of this application defined by the appended claims, and are considered to cover any or all modifications, variations, combinations, or equivalents in the scope of embodiments of this application. It is clear that a person skilled in the art may make various modifications and variations to embodiments of this application without departing from the scope of embodiments of this application. In this way, embodiments of this application are also intended to cover these modifications and variations provided that they fall within the scope of the claims of embodiments of this application and equivalent technologies thereof.

## Claims

1. A communication method, wherein the method is applied to a first access network device, and comprises:
receiving a first radio resource control RRC request message from a terminal device, wherein the terminal device is in an RRC non-connected state;
determining, based on the first RRC request message, that the terminal device is a device supporting a private function; and
receiving uplink information from the terminal device, or sending downlink small data to the terminal device.

2. The method according to claim 1, wherein the private function comprises one or more of the following:
a function of identifying private signaling; or
a small data transmission function in the RRC non-connected state.

3. The method according to claim 1 or 2, wherein before the receiving a first RRC request message from a terminal device, the method further comprises:
sending a first paging message, wherein the first paging message is for paging the terminal device.

4. The method according to any one of claims 1 to 3, wherein the determining, based on the first RRC request message, that the terminal device is a device supporting a private function comprises:
determining, based on a type of the first RRC request message, that the terminal device is the device supporting the private function;
determining, based on a first identifier of the terminal device that is comprised in the first RRC request message, that the terminal device is the device supporting the private function; or
determining, based on a first resource, that the terminal device requests small data, wherein the first resource is a resource that carries the first RRC request message, and is a resource reserved for small data transmission.

5. The method according to any one of claims 1 to 4, wherein the method further comprises:
obtaining, based on the first identifier of the terminal device that is comprised in the first RRC request message, context information of the terminal device that is stored in the first access network device; or
sending first request information to a second access network device, wherein the first request information comprises the first identifier; and receiving first response information from the second access network device, wherein the first response information comprises context information of the terminal device.

6. The method according to claim 5, wherein
the sending first request information to a second access network device comprises: sending the first request information to the second access network device through an Xn interface; and
the receiving first response information from the second access network device comprises: receiving the first response information from the second access network device through the Xn interface.

7. The method according to claim 5, wherein
the sending first request information to a second access network device comprises: sending the first request information to the second access network device through a first core network device; and
the receiving first response information from the second access network device comprises: receiving the first response information from the second access network device through the first core network device.

8. The method according to any one of claims 5 to 7, wherein the first request information further comprises one or more of the following:
a cell radio network temporary identifier C-RNTI allocated by the first access network device to the terminal device;
a physical cell identifier PCI of a cell in which the terminal device is located and that is covered by the first access network device;
integrity protection information of the terminal device; or
an identifier of the cell in which the terminal device is located and that is covered by the first access network device.

9. The method according to any one of claims 5 to 8, wherein the first response information further comprises first indication information, and the first indication information indicates that the terminal device is the device supporting the private function.

10. The method according to any one of claims 5 to 9, wherein the method further comprises:
resuming a radio bearer configuration and a security configuration of the terminal device based on the context information.

11. The method according to any one of claims 1 to 10, wherein the uplink information comprises:
a second RRC request message, wherein the second RRC request message is for requesting to set up a connection to the first core network device; and
first uplink small data and/or a buffer status report BSR.

12. The method according to any one of claims 1 to 11, wherein the method further comprises:
scheduling an uplink resource for the terminal device, wherein the uplink resource is for sending the uplink information.

13. The method according to any one of claims 1 to 10, wherein before the sending downlink small data to the terminal device, the method further comprises:
receiving a second RRC request message from the terminal device, wherein the second RRC request message is for requesting to set up a connection to the first core network device.

14. The method according to claim 13, wherein the method further comprises:
receiving second uplink small data and/or a BSR from the terminal device.

15. The method according to claim 11 or 13, wherein the method further comprises:
sending a second request message to the first core network device based on the second RRC request message, wherein the second request message is for requesting to set up the connection between the terminal device and the first core network device.

16. The method according to any one of claims 1 to 15, wherein before the receiving a first RRC request message from a terminal device, the method further comprises:
when the terminal device is in an RRC connected state, receiving second indication information from the terminal device, wherein the second indication information indicates that the terminal device is the device supporting the private function; and
establishing a mapping relationship between the first identifier of the terminal device and a second identifier, wherein the second identifier indicates that the terminal device is the device supporting the private function; or adding the first identifier of the terminal device to a first set, wherein the first set is a set of identifiers of devices supporting the private function.

17. The method according to any one of claims 1 to 16, wherein before the receiving a first RRC request message from a terminal device, the method further comprises:
sending a first RRC release message to the terminal device, wherein the first RRC release message is for releasing the terminal device to the RRC non-connected state, the first RRC release message further comprises suspend indication information, and the suspend indication information indicates the terminal device to retain the context information.

18. The method according to any one of claims 1 to 17, wherein the RRC non-connected state comprises an RRC idle state or an RRC inactive state.

19. A communication method, wherein the method is applied to a terminal device, and comprises:
sending a first RRC request message to a first access network device, wherein the terminal device is in an RRC non-connected state, and the terminal device supports a private function; and
sending uplink information to the first access network device, or receiving downlink small data from the first access network device.

20. The method according to claim 19, wherein the private function comprises one or more of the following:
a function of identifying private signaling; or
a small data transmission function in the RRC non-connected state.

21. The method according to claim 19 or 20, wherein the sending a first RRC request message to a first access network device comprises:
sending the first RRC request message to the first access network device in a random access process; or
sending the first RRC request message to the first access network device through a first resource, wherein the first resource is a resource reserved for small data transmission.

22. The method according to any one of claims 19 to 21, wherein the sending uplink information to the first access network device comprises:
receiving scheduling information from the first access network device; and
sending the uplink information to the first access network device through an uplink resource scheduled by using the scheduling information.

23. The method according to any one of claims 19 to 21, wherein the sending uplink information to the first access network device comprises:
sending the uplink information to the first access network device through a second resource, wherein the second resource is a resource reserved for the small data transmission.

24. The method according to any one of claims 19 to 23, wherein the uplink information comprises a second RRC request message, and comprises uplink small data and/or a BSR, and the second RRC request message is for requesting to set up a connection to a first core network device.

25. The method according to any one of claims 19 to 21, wherein the method further comprises:
sending a second RRC request message to the first access network device, wherein the second RRC request message is for requesting to set up a connection to a first core network device.

26. The method according to claim 25, wherein the method further comprises:
sending uplink small data and/or a BSR to the first access network device.

27. The method according to any one of claims 19 to 26, wherein the RRC non-connected state comprises an RRC idle state or an RRC inactive state.

28. A communication device, comprising:
one or more processors;
one or more memories; and
one or more computer programs, wherein the one or more computer programs are stored in the one or more memories, and the one or more computer programs comprise instructions; and when the instructions are executed by the one or more processors of the communication device, the communication device is enabled to perform the method according to any one of claims 1 to 18.

29. A communication device, comprising:
one or more processors;
one or more memories; and
one or more computer programs, wherein the one or more computer programs are stored in the one or more memories, and the one or more computer programs comprise instructions; and when the instructions are executed by the one or more processors of the communication device, the communication device is enabled to perform the method according to any one of claims 19 to 27.

30. A computer-readable storage medium, wherein the computer-readable storage medium is configured to store a computer program; and when the computer program is run on a computer, the computer is enabled to perform the method according to any one of claims 1 to 18, or the computer is enabled to perform the method according to any one of claims 19 to 27.

31. A chip, comprising one or more processors and a communication interface, wherein the one or more processors are configured to read instructions, to perform the method according to any one of claims 1 to 18 or the method according to any one of claims 19 to 27.
